# EUROPÄISCHE PATENTANMELDUNG

(11) **EP 2 322 339 A2**
(43) Veröffentlichungstag der Anmeldung: **18.05.2011**
(21) Anmeldenummer: 10013316.4
(22) Anmeldetag: 05.10.2010
(51) Int. Cl.: B29C 51/10

(54) **Verfahren zur Umformung eines ebenen Schichtstoffes**

(30) Priorität: 06.10.2009 DE 102009048334
(71) Anmelder: Niebling, Curt, jun., 82377 Penzberg (DE)
(72) Erfinder: Niebling, Curt, jun., 82377 Penzberg (DE)
(74) Vertreter: Brehm, Hans-Peter

(57) **Zusammenfassung**

Die Hochdruckumformung eines anfänglich ebenen, einlagigen oder mehrlagigen Schichtstoffes (40) erfolgt unter den Bedingungen des bekannten High-Pressure-Forming-Verfahrens (vgl. EP 0 371 425 B1) mit Hilfe eines an sich bekannten Formwerkzeugs (90) (vgl. DE 41 13 568 C1), und erzeugt am angestrebten 3D-Formteil zusätzliche Flächen. Der damit einhergehende Materialtransport kann Schichtdickenschwankungen am fertigen 3D-Formteil verursachen. Um diese Schichtdickenschwankungen möglichst gering zu halten, werden am ebenen Schichtstoffstück benachbart und im Abstand zu einem randnahen umzuformenden Bereich des Schichtstoffabschnittes ein oder mehrere Schnitt(e) (41, 43) erzeugt, welche das Schichtstoffstück längs einer begrenzten Länge durchtrennen: Vorzugsweise kann bei der Hochdruckumformung dieses mit Schnitt(en) versehenen Schichtstoffstückes (40) auf dem Schichtstoff (40) eine Membranfolie (50) aufliegen, welche ein Entweichen des fluiden Druckmittels durch diese Schnitte (41, 43) hindurch verhindert. In diesem Falle wird eine Doppelschicht aus Schichtstoff (40) und lose aufliegender Membranfolie (50) umgeformt.

## Beschreibung

### TECHNISCHES GEBIET

Die vorliegende Erfindung betrifft ein Verfahren zur Umformung eines ebenen Schichtstoffes.

Bei dieser Umformung kann ein dreidimensional verformtes Formteil aus dem Schichtstoff erzeugt werden. Insoweit betrifft die vorliegende Erfindung ein Verfahren zur Herstellung eines dreidimensional verformten Formteils aus einem Schichtstoff. Das so erhältliche "dreidimensional verformte Formteil aus einem Schichtstoff" wird nachstehend kurz als 3D-Schichtstoffformteil bezeichnet.

Alternativ kann bei dieser Umformung ein vorgelegtes 3D-Trägerteil mit dem hier als Bezugsmaterial dienenden Schichtstoff kaschiert werden. "3D-Trägerteil" bezeichnet hier einen Körper mit einer dreidimensional gestalteten Oberflächenkontur. Insoweit betrifft die vorliegende Erfindung ein Verfahren zur Kaschierung eines 3D-Trägerteils mit einem Schichtstoff.

Ein bevorzugt eingesetzter Schichtstoff ist eine wenigstens teilweise bedruckte, metallisierte und/oder sonst wie beschichtete Folie aus einem thermoplastischen Kunststoff. In diesem Falle wird ein wenigstens teilweise bedrucktes, metallisiertes und/oder sonst wie beschichtetes, dreidimensional verformtes Folienteil aus einem thermoplastischen Kunststoff erhalten. "Dreidimensional verformtes Folienteil" wird nachstehend kurz als 3D-Folienteil bezeichnet.

Ein beispielhaftes, bedeutsames Erzeugnis des zuletzt genannten Verfahrens ist ein schalenförmiges, mit einer schichtförmigen metallischen Antennenstruktur versehenes 3D-Folienteil, das seinerseits zur Erzeugung eines Gehäuseteils für ein mobiles Telekommunikationsgerät bestimmt ist. Insoweit betrifft die vorliegende Erfindung auch ein so erhältliches schalenförmiges Gehäuseteil.

Abhängig von ihrer Anwendung weisen die erfindungsgemäß erhältlichen 3D-Folienteile typischerweise eine, einem vorgegebenen Layout folgende, grafische, funktionale und/oder dekorative Gestaltung mit unterschiedlich gefärbten Abschnitten und gegebenenfalls mit zusätzlich einem oder mehreren transparenten Abschnitt(en) auf. Diese 3D-Folienteile können beispielsweise als Leuchtenabdeckungen, als beleuchtete Schilder, als beleuchtbare Druck- oder Schalter-Tasten, als Display-Einrichtungen, als Skalen-, Armaturen- und/oder Instrumenten-Anzeigetafeln, sowie als Zifferblätter und Signalanzeigen verschiedenster Art eingesetzt werden. Ein wichtiges Verfahrenserzeugnis ist ein schalenförmiges, mit einer schichtförmigen metallischen Antennenstruktur versehenes Gehäuseteil für ein mobiles Telekommunikationsgerät, wie etwa ein Mobilfunktelefon, ein tragbarer Rechner, wie etwa Notebook oder PDA (Personal Digital Assistant), ein Musik-Speicher und -wiedergabegerät (MP3-Player), ein Handfunkgerät, ein schnurloses Telefon und dergleichen. Ohne dass damit eine Einschränkung der vorliegenden Erfindung beabsichtigt ist, wird das erfindungsgemäße Verfahren nachstehend insbesondere anhand der Herstellung einer Unterschale für ein Mobilfunkgerät (Handy) erläutert.

### ZUM STAND DER TECHNIK

Mehr im Einzelnen betrifft die Erfindung ein Verfahren zur Umformung eines ebenen Schichtstoffes
mit wenigstens nachstehenden Verfahrensschritten:
- es wird ein ebenes Schichtstoffstück bereitgestellt, das wenigstens einen Schichtstoffabschnitt umfasst, an dem eine Umformung vorgenommen werden soll,
   wobei dieser Schichtstoffabschnitt wenigstens einen randnahen Bereich aufweist, in dem der Schichtstoff beim Verformungsvorgang umgeformt wird (randnaher, zu verformender Bereich);
- innerhalb des Schichtstoffstückes, außerhalb des Schichtstoffabschnittes und benachbart sowie im Abstand zu diesem randnahen, zu verformenden Bereich wird wenigstens ein, das Schichtstoffstück längs einer begrenzten Länge durchtrennender Schnitt erzeugt;
- das mit diesem oder diesen Schnitt(en) versehene Schichtstoffstück wird in definierter Anordnung an einem Rahmen angebracht, wobei lediglich die randseitigen Abschnitte des Schichtstoffstückes auf dem Rahmen aufliegen;
- wahlweise kann das so auf dem Rahmen aufliegende Schichtstoffstück in eine Heizzone eingebracht werden, und dort wenigstens der Schichtstoffabschnitt auf eine vorgegebene höhere Temperatur erwärmt werden;
- das so auf dem Rahmen aufliegende ebene Schichtstoffstück wird innerhalb eines Formwerkzeugs umgeformt, wobei wenigstens der Schichtstoffabschnitt an eine Kontur einer vorgegebenen Formfläche des Werkzeuges oder an wenigstens einen Teil Oberfläche eines, innerhalb des Formwerkzeugs befindlichen 3D-Trägerteils angelegt wird; und
- überschüssige, den verformten Schichtstoffabschnitt umgebende Teile des Schichtstoffstückes werden abgetrennt und entfernt.

Ein Verfahren dieser Art ist im Wesentlichen aus dem Dokument DE 100 00 603 A1 bekannt.

Wird ein ursprünglich ebener Schichtstoff zu einem 3D-Schichtstoffformteil verformt, das zusätzlich Vertiefungen und/oder erhabene Abschnitte bezüglich der anfänglichen Schichtstoffebene aufweist, so werden zusätzliche Flächen geschaffen, was typischerweise Materialtransporte erfordert, die am fertigen 3D-Schichtstoffformteil Dickenschwankungen am Schichtstoff verursachen. Die zusätzlich erzeugten Schnitte sollen Zugspannungen abbauen, die von den Materialtransporten verursacht werden. Anstelle Schichtstoffmaterial zu transportieren, sollen die Zugspannungen dadurch abgebaut werden, dass sie Schnitte zu breiteren Spalten aufweiten und ausdehnen. Naturgemäß werden die Schnitte und die resultierenden Spalten in Teilen des Schichtstoffstückes außerhalb des Schichtstoffabschnittes erzeugt; solche Teile werden später vom fertigen 3D-Schichtstoffformteil abgetrennt und entfernt.

Soweit in den Beispielen konkret beschrieben, offenbart DE 100 00 603 A1 eine zweistufige Verformung des Schichtstoffes. In einer ersten Stufe wird der ebene Schichtstoff mit Hilfe eines mechanischen Stempels an die Formfläche angenähert, ohne diese zu berühren. In der zweiten Stufe wird der bereits angenäherte Schichtstoff mit Hilfe von Vakuum, das über Mikroporen in der Formfläche wirkt, an die Formfläche angesaugt und dicht angelegt, so dass auch Oberflächenmodifizierungen der Formfläche auf die anliegende Oberfläche des Schichtstoffes übertragen werden. Der Einschnitt in dem Schichtstoff wird zeitlich vor oder gleichzeitig mit der ersten Stufe der Verformung mit Hilfe des mechanischen Stempels erzeugt. Eine gemeinsam mit dem Stempel bewegte Schneidklinge kann den Einschnitt erzeugen. Der Einschnitt wird in einem Schichtstoffabschnitt erzeugt, der nicht an dem mit Mikroporen versehenen Formflächenabschnitt anliegen soll, um die eine Anlage des Schichtstoffes an diesem Formflächenabschnitt verursachende Wirkung des Vakuums nicht zu beeinträchtigen.

Beim bekannten Verfahren ist die erste Verformungsstufe mit Hilfe des mechanischen Stempels zwingend. Der anfänglich ebene Schichtstoff kann nicht allein mit Hilfe des Vakuums angesaugt und an die Formfläche angelegt werden, weil die Vakuumquellen, das heißt hier die Mikroporen, durch den Schnitt im Schichtstoff hindurch Luft ansaugen würden, und damit das Vakuum seine Wirkung verlieren würde und den Schichtstoff nicht ausreichend ansaugen könnte.

Eine Vorformung des Schichtstoffes mit Hilfe eines mechanischen Stempels kann Beeinträchtigungen der Qualität der vom Stempel kontaktierten Schichtstoffoberfläche verursachen, insbesondere im Falle empfindlicher Schichtstoffe, wie etwa hochglänzende Folien aus Kunststoff oder Metall.

Das Dokument EP 0 371 425 B1 offenbart ein Verfahren zur Herstellung eines tiefgezogenen Kunststoff-Formteils, wobei kalt-reckbares Folienmaterial bei einer Arbeitstemperatur unterhalb der Erweichungstemperatur des Folienmaterials mit Hilfe eines fluiden Druckmittels unmittelbar und direkt beaufschlagt und isostatisch verformt wird. Die Besonderheit besteht darin, dass der Druckmitteldruck mehr als 20 bar beträgt; und die Verformung des Folienmaterials innerhalb einer Zeitspanne kleiner als 5 Sekunden durchgeführt wird.

Nach diesem Verfahren kann auch ein mit einem Belag, insbesondere ein mit einer Farbschicht, einem Farbaufdruck, einer aufgedampften Metalldünnschicht oder mit einer elektrisch leitenden Lackschicht versehenes Folienmaterial verformt werden. Beispielsweise kann die Verformung des Folienmaterials bei einer Arbeitstemperatur zwischen 80 und 130 °C und unter einem Druckmitteldruck zwischen 50 und 300 bar, insbesondere unter einem Druckmitteldruck zwischen 60 und 250 bar durchgeführt werden.

Dieses Verfahren wird in der Fachwelt auch als "Hochdruckverformung beziehungsweise Hochdruckumformung" von Kunststofffolien, beziehungsweise als "Höchstdruckverfahren", beziehungsweise als "Kaltverformen von Folien nach dem High-Pressure-Forming-Verfahren", beziehungsweise als HPF-Verfahren (von High-Pressure-Forming) bezeichnet. Bei dem klassischen HPF-Verfahren soll kaltreckbares Folienmaterial bei einer Arbeitstemperatur unterhalb der Erweichungstemperatur des Folienmaterials isostatisch verformt werden. Nach diesem bekannten klassischen HPF-Verfahren wird beispielsweise eine transparente, eine Schichtdicke von 125 µm aufweisende PC-Folie (Makrofol®, bezogen von BAYER AG) mit einer Erweichungstemperatur von etwa 150 °C auf eine Arbeitstemperatur im Bereich von 90 bis 120 °C erwärmt und daraufhin mit Hilfe von Druckluft von 150 bar umgeformt.

Jüngst ist auch eine modifizierte Ausführungsform des HPF-Verfahrens bekannt geworden. Mit dem Dokument WO2009/04353 A2 wird vorgeschlagen, bei einem Verfahren mit den vorstehend genannten Maßnahmen eine solche Erwärmung vorzunehmen, damit wenigstens eine Seite des gesamten Folienabschnittes oder des überwiegenden Teils des Folienabschnittes eine Folienoberflächentemperatur im Bereich von 10 bis 65 °C oberhalb der Vicat-Erweichungstemperatur B/50 des Folienmaterials aufweist.

Das Dokument DE 41 13 568 C1 beschreibt eine Vorrichtung zur Hochdruckverformung von Kunststofffolien nach diesem HPF-Verfahren.

Ausweislich der Dokumente DE 199 57 850 A1 und DE 10 2008 050 564 A1 kann das HPF-Verfahren auch zur Kaschierung eines 3D-Trägerteils mit einem als Bezugsmaterial dienenden Schichtstoff eingesetzt werden.

Der Ausdruck "Folie aus thermoplastischem Kunststoff' soll nicht nur einlagige Folien erfassen, sondern auch mehrlagige Folienverbundstoffe. Bei derartigen Folienverbundstoffen muss die Bedruckung, Metallisierung und/oder Beschichtung nicht notwendigerweise auf einer Oberfläche des Folienverbundstoffes aufgebracht sein, sondern könnte auch sandwichartig zwischen zwei Folien angeordnet sein.

Ein beispielhafter mehrlagiger Folienverbundstoff, der mittels isostatischer Hochdruckverformung zu einem dreidimensional verformten Folienelement umgeformt werden kann, ist aus dem Dokument DE 103 27 453 A1 bekannt. Hier wird ein Verbundsystem (Laminat) beschrieben, das für die Herstellung von digital dekorierten Kunststoffformteilen nach dem IMD-Verfahren eingesetzt werden kann, und das besteht aus:
(A) einer thermoplastischen, lichtdurchlässigen Kunststofffolie mit einer Schichtdicke von 20 µm bis 1000 µm,
(B) einer Primerschicht mit einer Schichtdicke von 0,5 µm bis 20 µm;
(C) einer Farbschicht, vorzugsweise mit einer Schichtdicke von 0,5 µm bis 80 µm, auf Basis von Pigmenten und eines Bindemittels aus Kunststoff;
(D) gegebenenfalls einer zweiten Primerschicht mit einer Schichtdicke von 0,5 µm bis 20 µm, die von (B) verschieden sein kann;
(E) einer Schicht aus einem thermoplastischen, unter bestimmten Bedingungen hergestellten Polyurethan mit einer Härte von 55 bis 95 Shore A; und
(F) einer thermoplastischen Kunststofffolie mit einer Schichtdicke von 20 µm bis 1000 µm, vorzugsweise von 50 µm bis 500 µm, die von (A) verschieden sein kann.

Dieses Verbundsystem wird vorzugsweise bei gemäßigten Temperaturen verformt, beispielsweise mit Hilfe des so genannten High-Pressure-Forming-Verfahrens (DE-A 3 844 584 und EP 0 371 425 B1). Vorzugsweise erfolgt die Verformung des Verbundsystems unterhalb der Erweichungstemperatur der Folie (A), so dass deren Texturierung erhalten bleibt und die Druckschicht nicht beeinträchtigt wird.

Ein alternativer mehrlagiger Folienverbundstoff kann aufgebaut sein, aus
- (A) einer zumindest teilweise transparenten Trägerfolie;
- (B) den Komponenten eines flächigen Elektrolumineszenz-Elementes, einschließlich Elektrodenschicht, lsolations-schicht(en), einer Schicht mit einer, durch ein elektrisches Feld erregbaren Leuchtsubstanz und einer Rückelektrodenschicht; und
- (C) einer Schutzschicht aus hochtemperaturbeständigem Schutzlack

Die Komponenten des Elektrolumineszenz-Elementes bilden ein mit Hilfe von Wechselstrom betreibbares Dickfilm-AC-EL-Element, das typischerweise eine Schichtdicke von etwa 50 µm bis etwa 250 µm haben kann. Zusammen mit der transparenten Trägerfolie (besonders bevorzugte Schichtdicke 150 µm bis 350 µm) kann hier der gesamte umzuformende mehrlagige Folienverbundstoff eine Schichtdicke von etwa 200 µm bis etwa 1500 µm aufweisen. Ein solcher mehrlagiger Folienverbundstoff, der mittels isostatischer Hochdruckverformung zu einem dreidimensional verformten Folienelement umgeformt werden kann, ist beispielsweise aus dem Dokument DE 10 2006 031 315 A1 bekannt.

Mit der Bezugnahme auf die Dokumente EP 0 371 425 B1, WO2009/043539 A2, DE 41 13 568 C1, und DE 10 2008 050 564 A1 soll deren Inhalt - soweit zum Verständnis der vorliegenden Erfindung hilfreich - auch zum Bestandteil der vorliegenden Unterlagen gemacht werden. Dies gilt insbesondere auch für die Auswahl geeigneter Materialien für einlagige Kunststofffolien, für mehrlagige Folienverbundstoffe und für die Auswahl der Verfahrensbedingungen zu deren isostatischer Verformung nach dem HPF-Verfahren.

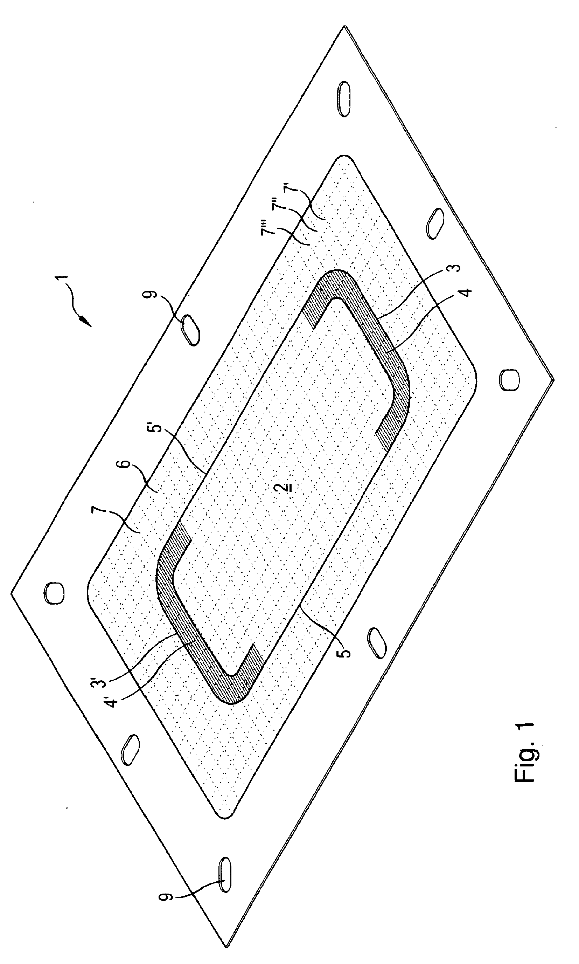

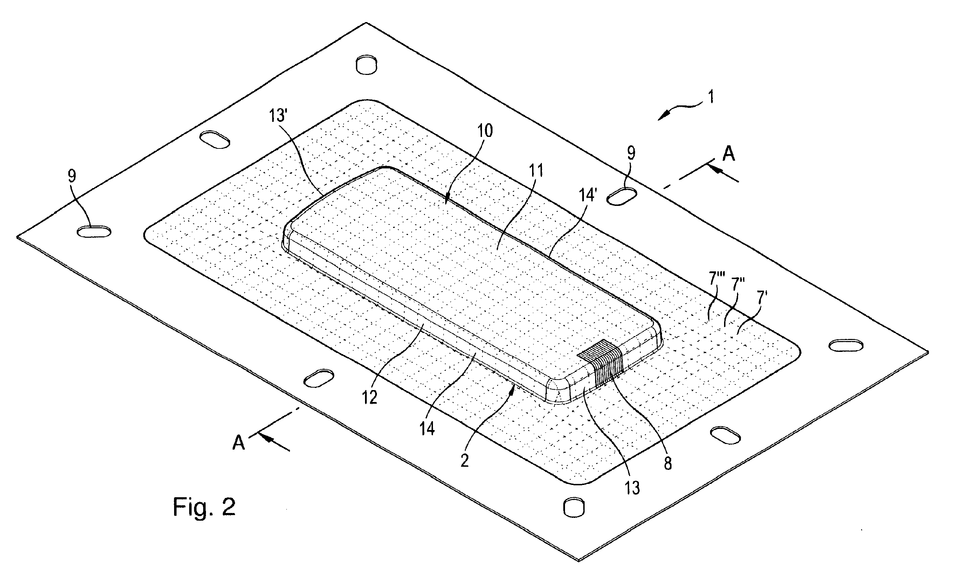

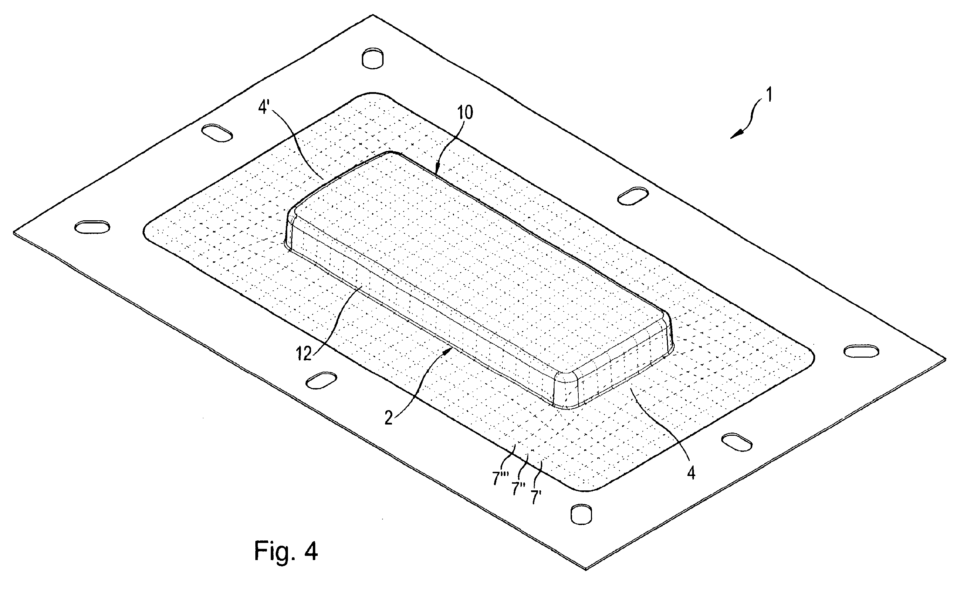

Die nachstehend noch im Einzelnen erläuterten Figuren 2 und 4 zeigen ein einfaches 3D-Folienteil, das nach dem erfindungsgemäßen Verfahren erhältlich ist. An einem anfänglich ebenen Folienstück (vergleiche Figur 1) ist mit Hilfe isostatischer Hochdruckumformung nach dem HPF-Verfahren ein schalenförmiges Gehäuseteil ausgebildet worden, mit einer leicht gekrümmten Rückenwand und mit einer einstückig und abgerundet damit verbundenen Seitenwand, die sich längs des gesamten Rückenwandumfangs erstreckt und senkrecht zur Rückenwandebene ausgerichtet ist. Diese Seitenwand hat beim Gehäuseteil nach Fig. 2 eine Höhe von etwa 7 mm und beim Gehäuseteil nach Fig. 4 eine Höhe von 10,5 mm. Es ist ohne weiteres ersichtlich, dass, - ausgehend von dem ebenen Folienstück - bei der isostatischen Umformung diese Seitenwand neu und zusätzlich erzeugt worden ist.

Zur Bildung dieser Seitenwand muss Folienmaterial aus den umgebenden Bereichen aus seinem ursprünglichen Verbund gelöst, transportiert und herangeschafft werden, um die neue Seitenwand zu bilden. Man kann den hier interessierten Bereich des ursprünglichen ebenen Folienstücks als einen Verbund von parallelen und miteinander fluchtenden differentiellen Dünnschichten betrachten, die aus langkettigen Polymermolekülen bestehen, die im festen Zustand relativ unbeweglich sind. Benachbarte differentielle Dünnschichten sind mit Hilfe elektrostatischer Wechselwirkungen, van der Waals-Kräften, Wasserstoffbrückenbindungen und dergleichen miteinander verbunden. Ferner besteht über wechselseitige sterische Behinderungen und wechselseitige Knäuelbildung der Polymermoleküle auch eine Art formschlüssiger Verbindungen zwischen den differentiellen Dünnschichten. Beim Übergang vom flüssigen Zustand über den plastischen Zustand bis zum festen Zustand müssen zur Lösung dieser Wechselwirkung Bindungen und Verbindungen zunehmend größere Kräfte aufgebracht werden, damit eine differentielle Dünnschicht gegenüber ihrer benachbarten differentiellen Dünnschicht verstellt und verschoben werden kann, um über eine Dehnung des ursprünglichen Folienmaterials die mit dem Tiefziehvorgang des HPF-Verfahrens erfolgende neue Fläche zu bilden. Tiefziehen heißt Dehnen!

Mit dem HPF-Verfahren können die zur Flächenvergrößerung durch Dehnung des ursprünglichen Folienmaterials erforderlichen Kräfte ohne weiteres aufgebracht werden. Jedoch sind diese zur Dehnung erforderlichen Kräfte erheblich größer, als die typischerweise zur Umformung durch Abwicklung des gleichen Folienmaterials erforderlichen Kräfte. Bei einer Abwicklung erfolgt nur eine Verlagerung der bereits vorhandenen Fläche aus der Horizontalen in die Vertikale, ohne dass eine wesentliche Streckung und Dehnung des Folienmaterials stattfindet. Bei einer Abwicklung wird die Folie an den Krümmungsradius am Formwerkzeug angelegt. Dies stresst die Folie wesentlich weniger, als eine Streckung und Dehnung. Dies ist auch aus der alltäglichen Lebenserfahrung geläufig, wonach eine hinreichend dünne Kunststofffolie ohne weiteres abgebogen, verformt, geknickt oder gefaltet, ja sogar zu einem Knäuel zusammengedrückt werden kann, während eine Längenzunahme der gleichen Folie durch Dehnung erheblich größere Kräfte erfordert. Die durch Dehnung zu erreichende Flächenvergrößerung beansprucht nicht nur den unmittelbar umzuformenden Folienabschnitt, sondern stresst auch die umgebenden Bereiche, aus denen Folienmaterial abgezogen, transportiert und zur neu zu erzeugenden Fläche herangeschafft werden muss. Diesem Stress halten übliche Folienmaterialien ohne weiteres stand, wenn die Folie eine ausreichende Schichtdicke aufweist, beispielsweise eine Schichtdicke von wenigstens etwa 100 bis 500 µm.

Bei einer bedruckten, metallisierten und/oder sonst wie beschichteten Folie ist die Bedruckung, die Metallisierung und/oder die Beschichtung fest mit der Folie verbunden. Wird bei der isostatischen Umformung durch Dehnung der Folie eine Zunahme der Folienfläche erzeugt, so muss auch die Fläche der Bedruckung, der Metallisierung und/oder der sonstigen Beschichtung entsprechend zunehmen. Für die Bedruckung, die Metallisierung und/oder Beschichtung verursacht eine solche Flächenzunahme jedoch einen wesentlich größeren Stress, weil die Schichtdicke der Bedruckung, der Metallisierung und/oder der Beschichtung typischerweise nur 1/10 der Schichtdicke der Folie oder noch weniger ausmacht. In einem solchen Falle treten bei der durch die isostatische Umformung durch Dehnung des Folienmaterials erzwungenen Flächenzunahme häufig Beschädigungen an der Bedruckung, der Metallisierung und/oder der Beschichtung auf.

Nachstehend wird ein besonders anschauliches Beispiel dieser Schwierigkeiten beschrieben.

Die Entwicklung mobiler Telekommunikationsgeräte wie etwa Mobilfunktelefone, tragbare Rechner, wie Notebook oder PDA (Personal Digital Assistant), Musikwiedergabegeräte (MP3-Player), schnurloses Telefon, Handfunkgeräte und dergleichen wird von zwei gegensätzlichen Trends bestimmt. Einerseits sollen die Abmessungen solcher Geräte immer kleiner werden; andererseits werden immer mehr verschiedene und immer komplexere Funktionen und Einsatzmöglichkeiten gefordert. So ist es mittlerweile möglich, mit Mobilfunktelefonen zu fotografieren, Musik abzuspielen, e-Mails zu empfangen, Internetdienste abzurufen und dergleichen. Mobile Telefongespräche sollen aus den Netzen der üblichen Telefonprovider möglich sein, wobei typischerweise Frequenzen im Bereich um 0,9 GHz sowie im Bereich von 1,8 bis 1,9 GHz genutzt werden (Dual-Mode-Geräte im GMS-Standard) oder zusätzlich auch der UMTS-Frequenzbereich oberhalb 2,0 GHz genutzt wird, um einen Datenaustausch mit Internet und Internetdiensten zu ermöglichen (Multi-Mode-Geräte). Ferner soll ein Datenaustausch im Nahbereich möglich sein, etwa nach dem eine Frequenz von 2,45 GHz nutzenden Bluetooth-Standard oder mit Hilfe von Frequenzen von 2,45 GHz und 5,25 GHz nutzender Wireless-Lan-Systeme oder über schnurlose Übermittlung (nach dem neuen DECT-Standard bei einer Frequenz oberhalb 5 GHz). Schließlich ist auch der Empfang von GPS-Daten aus dem Global-Position-System erwünscht, um Positionsbestimmungen durchführen zu können; hier werden für die zivile Nutzung zur Zeit typischerweise Frequenzen bei 1575,42 MHz und 1176,45 MHz genutzt.

Zum Senden in diese und/oder zum Empfangen aus diesen unterschiedlichen Frequenzbereichen werden unterschiedliche, je spezifisch angepasste Antennen benötigt, deren Resonanzfrequenz an den zu nutzenden Frequenzbereich angepasst sein muss. Um die Antennenlänge gegenüber 1/4 der je zu übertragenden beziehungsweise zu empfangenden Wellenlänge verringern zu können, werden typischerweise ebene, flächige, metallische oder metallisierte Strahlerelemente verwendet, die über Induktivität liefernde und/oder die Kapazität modifizierende Anpassungsschaltungen miteinander verknüpft oder gekoppelt sind. Hier werden häufig Planarantennen, etwa in Form der PIF-Antennen (Planar Inverted F-Antennen) eingesetzt, deren ebene Strahlerelemente im Abstand zu einer korrespondierenden Erdungs- oder Massenstruktur auf der Hauptplatine des Telekommunikationsgerätes angeordnet sind. Solche ebenen, flächigen Strahlerelemente, etwa in der Form von Metallblechen oder Metallfolien werden typischerweise an der Innenseite der weitgehend ebenen Rückenwand des Telekommunikationsgerätes angebracht, insbesondere angeklebt.

Das Dokument DE 10 2007 020 501 A1 offenbart ein mobiles Kommunikationsendgerät mit einer HF-Platine, auf welcher eine Erdungsplatte der Antennenstruktur aufgebracht ist, und ferner mit einer invertierten F-Antenne mit einem Strahlerelement, das auf einer flexiblen Platine aufgebracht ist, wobei dieses Strahlerelement senkrecht zur Hauptfläche der HF-Platine angeordnet ist. Dieses senkrecht zur Hauptfläche der HF-Platine angeordnete Strahlerelement könnte dann an einer Seitenwand des Gehäuses dieses mobilen Kommunikationsendgerätes anliegen.

Weiterhin ist ein Mobilfunktelefon von SIEMENS AG handelsüblich zugänglich, bei welchem das Strahlerelement einer PIF-Antenne in der Gehäuseunterschale untergebracht ist. Dieses aus einem gestanzten Blechteil bestehende Strahlerelement weist einen großen, geschlitzten, ebenen Abschnitt auf, der an der ebenen Rückenwand dieser Gehäuseunterschale anliegt und dort von einstückig an die Innenwand der Gehäuseschale angespritzten Kunststoffstiften gehalten wird. An beiden seitlichen Rändern dieses großen geschlitzten ebenen Abschnittes sind ein bzw. zwei seitliche Ansätze einstückig angeformt und rechtwinklig abgewinkelt; der eine größere seitliche Ansatz liegt an der einen Seitenwand an, und die beiden kleineren anderen seitlichen Ansätze liegen an der anderen, gegenüber befindlichen Seitenwand an.

Das Dokument DE 10 2006 002 817 B4 betrifft eine Antenne für ein Telekommunikationsgerät. Die Antenne kann als Multibandantenne zum Senden und Empfangen von Kommunikationsdaten in mehreren Frequenzbändern ausgebildet sein und weist für jedes Frequenzband ein Strahlerelement mit entsprechend angepasster Resonanzfrequenz auf. Diese Antenne ist innerhalb eines mobilen Telekommunikationsgerätes untergebracht, für das ein wechselbares Gehäuseteil vorgesehen ist. Ein Austausch dieses wechselbaren Gehäuseteils gegen ein anderes kann die Resonanzfrequenz des Strahlerelementes beeinflussen. Daher ist zusätzlich an diesem auswechselbaren Gehäuseteil ein Antennenkorrekturglied angebracht, das mit dem Strahlerelement zusammenwirkt und die von diesem wechselbaren Gehäuseteil hervorgerufenen Einflüsse auf die Resonanzfrequenz des Strahlerelementes kompensiert. Dieses Antennenkorrekturglied kann ein Teil des Gehäuseteils sein, um den Raum im Gehäuse optimal nutzen zu können. Die Herstellung eines solchen Gehäuseteils mit integriertem Antennenkorrekturglied wird nicht im Einzelnen beschrieben.

Das Dokument US 6778139 B2 offenbart eine interne Folienantenne für einen tragbaren Computer (Notebook), die für einen Datenaustausch mit der näheren Umgebung über den Bluetooth-Standard (bei 2,45 GHz) oder über den Wireless-Lan-Standard bei Frequenzen von 2,45 GHz oder 5,25 GHz ausgelegt ist. Die biegsame, isolierende Trägerfolie kann aus Polyethylenterephthalat (PET) oder aus Polyethylen-naphthalat (PEN) bestehen und soll eine Schichtdicke von 5 bis 75 µm aufweisen. Die Antennenstruktur ist als invertierte F-Antenne ausgebildet und umfasst Strahlerelemente, Signalleitungen, Verbindungsleitungen, flächige elektrische Anschlüsse und dgl. Diese metallischen Komponenten werden mit Hilfe von Ätztechnik aus einer vollflächig auf der Trägerfolie aufgebrachten Kupferfolie oder aus einer galvanisch beschichteten Kupferfolie erzeugt. Es wird ausdrücklich festgestellt, dass bei den hier angewandten hohen Frequenzen der Anschlusspunkt der Signalleitung an dem Strahlerelement mit hoher Genauigkeit positioniert werden muss, denn bereits eine Abweichung von 0,1 mm von der vorgesetzten Position verstellt die Resonanzfrequenz der Antenne um etwa 10 MHz. Diese Folienantenne kann zwei eigenständige Strahlerelemente aufweisen, und die flexible Folienantenne kann im Notebookgehäuse so angeordnet werden, dass jedes Strahlerelement an einer Seitenfläche des Notebookgehäuses anliegt.

Es gibt Bestrebungen, diese flächigen Strahlerelemente, Signalleitungen, Verbindungsleitungen zu flächigen elektrischen Anschlüssen und solche flächigen elektrischen Anschlüsse als Metallisierung auf einer ebenen Kunststofffolie aufzubringen, die anschließend nach dem HPF-Verfahren zu einem schalenförmigen Gehäuseteil für ein mobiles Telekommunikationsgerät verformt wird. Um möglichst viele verschiedene flächige Strahlerelemente und sonstige Bestandteile einer Antennenstruktur, Signalleitungen, Verbindungsleitungen und flächige elektrische Anschlüsse in einem kleinen Telekommunikationsgerät unterzubringen, ist hier vorgesehen, die erforderlichen Metallisierungen nicht nur auf einem Flächenabschnitt für die weitgehend ebene Rückenwand aufzubringen, sondern auch auf Flächenabschnitten für die Seitenwände aufzubringen. Die für die Antennenstruktur(en) und dergleichen benötigten Metallisierungen werden mit Hilfe einer, leitfähige Metallpigmente enthaltenden Siebdruckpaste auf der Kunststofffolie aufgebracht. Dies kann mit Hilfe der üblichen Druckverfahren erfolgen, wie etwa Offsetdruck, Tiefdruck oder Siebdruck, wobei hier das Siebdruckverfahren bevorzugt wird. Die Antennenstruktur kann beispielsweise eine Schichtdicke von 10 µm aufweisen.

Es ist hinreichend bekannt, dass die Antennencharakteristik, und die Abstimmung auf den gewünschten Frequenzbereich ganz wesentlich von der Antennenstruktur, deren Anordnung und Ausbildung bestimmt wird und außerordentlich empfindlich auf Abweichungen reagiert; beispielsweise wird gefordert, dass die Strahlerelemente der Antennenstruktur, die Signalleitung, der Anschlusspunkt der Signalleitung an das Strahlerelement, die Verbindungsleitungen und die elektrisch leitenden Anschlüsse nach der Umformung der ursprünglich ebenen bedruckten Folie zum 3D-Folienteil mit einer Genauigkeit kleiner 0,1 mm die vorgesehene Positionierung einnehmen. Man denke hier etwa an eine 1 mm breite und lediglich 10 µm dicke Verbindungsleitung, die ein Antennenstrukturelement an der Rückenwand des Gehäuseteils über eine Länge von 7 bis 8 mm mit einem elektrisch leitenden Anschluss verbindet, der an der Seitenwand des Gehäuseteils angebracht ist; oder an ein mäanderförmiges Strahlerelement, das lediglich aus einem 0,75 mm breiten, aber mehr als 40 mm langen Band besteht und teilweise an der Rückenwand und teilweise an der Seitenwand anliegen soll. Wie soll diese Verbindungsleitung oder dieses Band der Längenzunahme standhalten, welche notwendigerweise beim Tiefziehen und Dehnen der ursprünglichen Folie auftritt, um die neuen Flächen der Seitenwände zu schaffen? Nach Kenntnis des hier sachkundigen Erfinders ist es bislang nicht gelungen, dieses Problem befriedigend zu lösen. Bei derartigen schmalen und langen metallisch leitenden Strukturen, die lediglich eine Schichtdicke von etwa 10 µm aufweisen, kommt es bei der vom Tiefziehvorgang beim HPF-Verfahren verursachten Dehnung der Folie, um die neu zu schaffenden Flächen zu schaffen, stets zur Bildung von Rissen in solch begrenzten elektrisch leitenden Strukturen, die deren Leitvermögen beeinträchtigen.

### AUFGABE DER VORLIEGENDEN ERFINDUNG

Davon ausgehend, besteht die Aufgabe der vorliegenden Erfindung darin, für ein Verfahren der eingangs genannten Art zur Umformung eines Schichtstoffes ein alternatives Umformungsmittel oder -medium vorzusehen, bei dessen Verwendung Beeinträchtigungen der Oberflächenqualität des umgeformten Schichtstoffes sicher ausgeschlossen sind.

Im Falle der Herstellung eines wenigstens teilweise bedruckten, metallisierten und/oder sonst wie beschichteten, dreidimensional verformten 3D-Folienteils aus einem anfänglich ebenen, auf einer oder auf beiden Oberfläche(n) wenigstens teilweise bedruckten, metallisierten und/oder sonst wie beschichteten Folienstücks aus thermoplastischem Kunststoff sollen auch Beeinträchtigungen und/oder Schädigungen der Bedruckung, Metallisierung und/oder Beschichtung vermindert oder vermieden werden, die beim Verformungsvorgang in randnahen Bereichen des Folienabschnittes auftreten können.

### DIE ERFINDUNGSGEMÄSSE LÖSUNG

Ausgehend von einem Verfahren zur Umformung eines ebenen Schichtstoffes mit wenigstens nachstehenden Verfahrensschritten:
- es wird ein ebenes Schichtstoffstück bereitgestellt, das wenigstens einen Schichtstoffabschnitt umfasst, an dem eine Umformung vorgenommen werden soll,
   wobei dieser Schichtstoffabschnitt wenigstens einen randnahen Bereich aufweist, in dem der Schichtstoff beim Verformungsvorgang umgeformt wird (randnaher, zu verformender Bereich);
- innerhalb des Schichtstoffstückes, außerhalb des Schichtstoffabschnittes und benachbart sowie im Abstand zu diesem randnahen, zu verformenden Bereich wird wenigstens ein, das Schichtstoffstück längs einer begrenzten Länge durchtrennender Schnitt erzeugt;
- das mit diesem oder diesen Schnitt(en) versehene Schichtstoffstück wird in definierter Anordnung an einem Rahmen angebracht, wobei lediglich die randseitigen Abschnitte des Schichtstoffstückes auf dem Rahmen aufliegen;
- wahlweise kann das so auf dem Rahmen aufliegende Schichtstoffstück in eine Heizzone eingebracht werden, und dort wenigstens der Schichtstoffabschnitt auf eine vorgegebene höhere Temperatur erwärmt werden;
- das so auf dem Rahmen aufliegende ebene Schichtstoffstück wird innerhalb eines Formwerkzeugs umgeformt, wobei wenigstens der Schichtstoffabschnitt an eine Kontur einer vorgegebenen Formfläche des Werkzeuges oder an wenigstens einen Teil der Oberfläche eines, innerhalb des Formwerkzeugs befindlichen 3D-Trägerteils angelegt wird; und
- überschüssige, den verformten Schichtstoffabschnitt umgebende Teile des Schichtstoffstückes werden abgetrennt und entfernt;
ist die erfindungsgemäße Lösung obiger Aufgabe
**dadurch gekennzeichnet, dass**
die Umformung mit Hilfe von fluidem Druckmittel unter einem Druckmitteldruck größer 20 bar innerhalb einer Zeitspanne kleiner 5 Sekunden bewirkt wird.

Damit erfolgt diese Umformung unter den Bedingungen des HPF-Verfahrens. Die Erfahrung zeigt, dass ein solcher Schnitt im Verlauf der isostatischen Umformung beim HPF-Verfahren zu einem deutlichen, mehrere Millimeter breiten Spalt verbreitert wird. Anstelle im zu verformenden Bereich neue Flächen durch Dehnung des Schichtstoffes zu bilden, werden neue Flächen außerhalb des Schichtstoffabschnittes durch Verbreiterung des oder der Schnitte(s) zu diesem deutlichen Spalt gebildet; zu transportierendes Schichtstoffmaterial wird durch Luft ersetzt. Im zu verformenden, randnahen Bereich wird der Schichtstoff hauptsächlich im Wege einer Abwicklung umgeformt; die Dehnungsbeanspruchung des Schichtstoffes wird hier wesentlich vermindert. Weil der Schichtstoff nicht wenigstens teilweise mit Hilfe eines mechanischen Stempels verformt wird, werden Beeinträchtigungen der Oberflächenqualität an der Oberfläche des verformten Schichtstoffabschnittes vermieden.

Im Falle einer Erwärmung des Schichtstoffabschnittes auf eine höhere Temperatur wird der Schichtstoffabschnitt auf eine solche Temperatur erwärmt, welche die Umformung des jeweiligen Schichtstoffes zum 3D-Schichtstoffformteil erleichtert und fördert.

### VORTEILHAFTE AUSGESTALTUNGEN DER ERFINDUNG

Mit Hilfe des erfindungsgemäßen Verfahrens kann ein anfänglich ebener Schichtstoff zu einem dreidimensional verformten Formteil aus dem Schichtstoff (3D-Schichtstoffformteil) umgeformt werden. Insoweit betrifft eine erste Ausgestaltung des erfindungsgemäßen Verfahrens
ein Verfahren zur Herstellung eines dreidimensional verformten Formteils aus einem Schichtstoff (3D-Schichtstoffformteil),
mit wenigstens nachstehenden Verfahrensschritten:
- es wird ein ebenes Schichtstoffstück bereitgestellt, das wenigstens einen Schichtstoffabschnitt umfasst, der hinsichtlich seiner Größe dem herzustellenden 3D-Schichtstoffformteil entspricht,
   wobei dieser Schichtstoffabschnitt wenigstens einen randnahen Bereich aufweist, in dem der Schichtstoff beim Verformungsvorgang umgeformt wird (randnaher, zu verformender Bereich);
- innerhalb des Schichtstoffstückes, außerhalb des Schichtstoffabschnittes und benachbart sowie im Abstand zu diesem randnahen, zu verformenden Bereich wird wenigstens ein, das Schichtstoffstück längs einer begrenzten Länge durchtrennender Schnitt erzeugt;
- das mit diesem oder diesen Schnitt(en) versehene Schichtstoffstück wird in definierter Anordnung an einem Rahmen angebracht, wobei lediglich die randseitigen Abschnitte des Schichtstoffstückes auf dem Rahmen aufliegen;
- wahlweise kann das so auf dem Rahmen aufliegende Schichtstoffstück in eine Heizzone eingebracht werden, und dort wenigstens der Schichtstoffabschnitt auf eine vorgegebene höhere Temperatur erwärmt werden;
- das so auf dem Rahmen aufliegende ebene Schichtstoffstück wird innerhalb eines Formwerkzeugs umgeformt, wobei wenigstens der Schichtstoffabschnitt an eine Kontur einer vorgegebenen Formfläche des Formwerkzeugs angelegt, und zum 3D-Schichtstoffformteil umgeformt wird; und
- überschüssige, das 3D-Schichtstoffformteil umgebende Teile des Schichtstoffstückes werden abgetrennt und entfernt;
wobei die Umformung mit Hilfe von fluidem Druckmittel unter einem Druckmitteldruck größer 20 bar innerhalb einer Zeitspanne kleiner 5 Sekunden bewirkt wird.

Ferner kann das erfindungsgemäße Verfahren zur Umformung eines Schichtstoffes zur Kaschierung eines 3D-Trägerteils mit einem Bezugsmaterial eingesetzt werden. In diesem Falle dient der Schichtstoff als Bezugsmaterial für das 3D-Trägerteil. Insoweit betrifft eine zweite Ausgestaltung des erfindungsgemäßen Verfahrens
ein Verfahren zur Kaschierung eines 3D-Trägerteils mit einem als Bezugsmaterial für das 3D-Trägerteil dienenden Schichtstoff, mit wenigstens nachstehenden Verfahrensschritten:
- es wird ein ebenes Schichtstoffstück bereitgestellt, das wenigstens einen Schichtstoffabschnitt umfasst, der an das Trägerteil angelegt werden soll, und der an seiner Anlageseite mit einem Kleber versehen ist,
   wobei dieser Schichtstoffabschnitt wenigstens einen randnahen Bereich (aufweist, in dem der Schichtstoff beim Kaschiervorgang umgeformt wird (randnaher, zu verformender Bereich);
- innerhalb des Schichtstoffstückes, außerhalb des Schichtstoffabschnittes und benachbart sowie im Abstand zu diesem randnahen, zu verformenden Bereich wird wenigstens ein, das Schichtstoffstück längs einer begrenzten Länge durchtrennender Schnitt erzeugt;
- das mit diesem oder diesen Schnitt(en) versehene Schichtstoffstück wird in definierter Anordnung an einem Rahmen angebracht, wobei lediglich die randseitigen Abschnitte des Schichtstoffstückes auf dem Rahmen aufliegen;
- das so auf dem Rahmen aufliegende Schichtstoffstück wird in eine Heizzone eingebracht und dort wenigstens der mit dem Kleber versehene Schichtstoffabschnitt auf wenigstens die Aktivierungstemperatur des Klebers erwärmt;
- das so auf dem Rahmen aufliegende ebene und erwärmte Schichtstoffstück wird innerhalb eines Werkzeugs umgeformt, wobei wenigstens der Schichtstoffabschnitt an wenigstens einen Teil der Oberfläche des in dem Werkzeug befindlichen 3D-Trägerteils angelegt und ankaschiert wird; und
- überschüssige, vom kaschierten 3D-Trägerteil abstehende Teile des Schichtstoffstückes werden abgetrennt und entfernt;
wobei die Umformung mit Hilfe von fluidem Druckmittel unter einem Druckmitteldruck größer 20 bar innerhalb einer Zeitspanne kleiner 5 Sekunden bewirkt wird.

"3D-Trägerteil" bezeichnet hier einen Körper mit einer dreidimensional gestalteten Oberflächenkontur. Als solches 3D-Trägerteil kommen irgendwelche Gegenstände in Betracht, die eine dreidimensional konfigurierte Hülle oder Schale haben, deren Oberfläche mit einem fest haftenden Schichtstoff beschichtet bzw. kaschiert werden soll. Typischerweise ist diese Hülle oder Schale an einer Stützkonstruktion abgestützt, die später auch für die Anbringung und Befestigung des kaschierten Produktes am Einsatzort sorgt. Derartige Trägerteile können aus einem Metall, beispielsweise einem Leichtmetall wie Aluminium, Magnesium und deren Legierungen, aus Kunststoff, hier etwa aus einem thermoplastischen und im Spritzguss verarbeitbaren Kunststoff wie etwa Polyamid, Polyvinylchlorid oder Polysulfon, ferner aus Holz und anderen stabilen und dauerhaften Werkstoffen bestehen. Für den Einsatz als Innenausstattungsteile in Kraftfahrzeugen werden derartige 3D-Trägerteile einschließlich ihrer Stützkonstruktion vorab typischerweise als einstückige Spritzgussteile im Spritzgussverfahren gefertigt und bestehen dann aus Kunststoffen, wie etwa Polyamid, Polyvinylchlorid oder Polysulfon.

Der für die Kaschierung vorgesehene Schichtstoff wird vor allem ausgewählt im Hinblick auf die Verarbeitbarkeit nach dem HPF-Verfahren, auf seine Dauerhaftigkeit, auf seine Schutzfunktion, auf seine Gebrauchstüchtigkeit und insbesondere im Hinblick auf die erzielbaren dekorativen Effekte. Es können einlagige oder mehrlagige Schichtstoffe eingesetzt werden. Die dekorativen Wirkungen können von der Oberfläche des 3D-Trägerteils ausgehen und durch eine oder mehrere transparente Folienschicht(en) modifiziert werden. Alternativ kann die dekorative Wirkung von einer Lage oder Schicht eines mehrlagigen Schichtstoffes, Laminates oder Verbundstoffes ausgehen, die von einer oder mehreren transparenten Folienschicht(en) modifiziert oder verstärkt wird. Beispielsweise kann die dekorative Wirkung von einer Metallfolie oder einem Edelholzfurnier oder von einer Furniernachbildung aus Kunststoff ausgehen, und diese dekorative Wirkung kann mit Hilfe von transparenten Folien modifiziert und verstärkt werden, auch um bestimmte Glanzeffekte zu erzielen; beispielsweise um eine Klavierlackoptik durch Folieneinsatz zu erzielen, wie in dem Dokument DE 10 2007 054 579 A1 angesprochen.

Weiterhin kann der Schichtstoff allein aus einer Strukturfolie bestehen, oder es kann ein mehrlagiger Schichtstoff verwendet werden, dessen Sicht- und Deckschicht aus einer Strukturfolie besteht. Strukturfolien haben eine strukturierte Oberfläche, die aus Vorsprüngen und Vertiefungen bezüglich einer ebenen Solloberfläche gebildet sind. Derartige Strukturen können eine natürliche Vorlage nachbilden, beispielsweise die Ledernarbung an natürlichem Leder oder die Holzmaserung an einer Holzoberfläche.

Als Kleber werden vorzugsweise Hitze-aktivierbare Klebemassen eingesetzt. Es ist ausreichend, eine solche Hitze-aktivierbare Klebemasse lediglich auf der Anlageseite des Schichtstoffes aufzubringen. Dies kann beispielsweise dadurch erfolgen, dass eine Lösung dieser Hitze-aktivierbaren Klebemasse im Siebdruckverfahren auf der Anlageseite des Schichtstoffes aufgebracht wird. Anschließend wird das Lösemittel durch Verdunstung und Trocknung entfernt. Es kann eine dünne gleichmäßige Trockenschicht aus Klebemasse erhalten werden, die häufig nur dort aufgebracht wird, wo Klebekraft benötigt wird. Alternativ kann eine solche Hitze-aktivierbare Klebemasse direkt als Trockenschicht von einem silikonisierten Trennpapier abgenommen und übertragen werden, beispielsweise in dem Schichtstoff und mit einer solchen Hitze-aktivierbaren Klebemasse versehenes Trennpapier gemeinsam durch einen Kalanderwalzenspalt geführt werden. Ferner können passend ausgewählte pulverförmige Kleber mit Hilfe von Extrusionsbeschichtung, beispielsweise durch Heiß-Extrusion oder Pulverbeschichtung oder durch sonstige Direktbeschichtung aufgebracht werden. Verschiedene Hitze-aktivierbare Schmelzkleber sind auch in Form von Schmelzklebefolie oder -vliese erhältlich und können in dieser Form - beispielsweise auch in einem gewünschten Zuschnitt - auf der Anlageseite des Schichtstoffes aufgebracht werden.

Derartige Hitze-aktivierbare Klebemassen und Schmelzkleber sind dem Fachmann bekannt, der aus vielen, handelsüblich erhältlichen Produkten auswählten kann. Nachstehend sind hier lediglich einige beispielhafte Rezepturen genannt:

Eine derartige Hitze-aktivierbare Klebemasse kann - als wesentliche Komponenten - bestehen aus einem elastomeren Basispolymer und aus einem Modifikationsharz, wobei das Modifikationsharz ein Klebharz und/oder ein Reaktivharz umfasst. Das elastomere Basispolymer kann ein thermoplastisches Polyurethan sein, oder ein Gemisch aus pulverförmigen, Polyurethan-bildenden Komponenten, wie aromatischen Diisocyanaten und Polyesterpolyolen mit einem hohen Gehalt an endständigen Hydroxylgruppen. Thermoplastische Polyurethane mit einem hohen Gehalt an endständigen Hydroxylgruppen liefern eine besonders hohe Klebefestigkeit zu verschiedenen Substraten.

Eine alternative Hitze-aktivierbare Klebemasse kann bestehen aus:
- 50 bis 95 Gew.-% eines verklebbaren Polymers, und aus
- 5 bis 50 Gew.-% eines Epoxidharzes oder einer Mischung aus mehreren Epoxidharzen;
- wobei das verklebbare Polymer seinerseits umfasst Acrylsäureverbindungen und/oder Methacrylsäureverbindungen und ein oder mehrere copolymerisierbare Vinylmonomere.

Eine weitere, Hitze-aktivierbare Klebemasse kann bestehen aus:
- 40 bis 98 Gew.-% acrylhaltigem Blockpolymer,
- 2 bis 50 Gew.-% eines oder mehrerer klebrig machender Epoxidharze und/oder Novolakharze und/oder Phenolharze; und
- 0 bis 10 Gew.-% Härter zum Vernetzen der Epoxidharze und/oder der Novolakharze und/oder der Phenolharze.

Zur optimalen Vernetzung können diesen Klebemassen zusätzlich geeignete Initiatoren und/oder Vernetzer zugesetzt werden, beispielsweise IR-Strahlung absorbierende Photoinitiatoren und/oder UV-Licht absorbierende Photoinitiatoren. Zusätzlich können Haftvermittler vorgesehen werden, beispielsweise sogenannte "Primer". Als geeignete Primer kommen beispielsweise Heißsiegelkleber auf der Basis von Polymeren wie Ethylvinylacetat oder funktionalisierte Ethylvinylacetate oder auch Reaktivpolymere in Betracht.

Derartige Hitze-aktivierbare Klebemassen können so erzeugt und eingestellt werden, dass sie eine Aktivierungstemperatur im Bereich von 60 bis 140 °C, noch weiter bevorzugt im Bereich zwischen 75 und 130 °C aufweisen. Derartige Aktivierungstemperaturen können auch durch Erwärmung innerhalb eines Formwerkzeugs leicht und schnell erreicht werden. Nach Abkühlung unter diese Aktivierungstemperatur, wird schnell wenigstens eine ausreichende Anfangsklebefestigkeit zwischen Schichtstoff und 3D-Trägerteil erhalten, so dass der Anpressdruck schnell beendet und das Produkt aus dem Werkzeug entnommen werden kann. Wird das unter hohem Druckmitteldruck herangeführte fluide Druckmittel nach einem ausreichend langen Anpressen des Schichtstoffes an das 3D-Trägerteil anschließend rasch aus der Druckglocke des Formwerkzeugs entfernt, so begünstigt die damit einhergehende Temperaturabsenkung des Formwerkzeugs und des beschichteten 3D-Trägerteils eine rasche Abkühlung der Kleberschicht unter deren Aktivierungstemperatur.

Weitere Einzelheiten zu derartigen Hitze-aktivierbaren Klebemassen lassen sich dem Dokument DE 10 2006 042 816 A1 entnehmen. Die dort beschriebenen Hitze-aktivierbaren Klebemassen werden im Rahmen der vorliegenden Erfindung bevorzugt eingesetzt. Hierbei sind solche Hitze-aktivierbaren Klebemassen und Schmelzkleber besonders bevorzugt, die innerhalb von Sekunden auf ihre Aktivierungstemperatur bringbar sind und im Verlauf der Abkühlung innerhalb von Sekunden eine ausreichende Anfangsklebefestigkeit sowohl zu dem anliegenden Substrat des Schichtstoffes wie zu der Oberfläche des 3D-Trägerteils hervorbringen und gewährleisten.

Geeignete Schichtstoffe für das erfindungsgemäße Verfahren sind nachstehend im einzelnen aufgeführt. Ein besonders geeigneter und bevorzugter Schichtstoff ist eine wenigstens teilweise bedruckte metallisierte und/oder sonst wie beschichtete Folie aus einem thermoplastischen Kunststoff. Bei Verwendung einer solchen Folie kann das erfindungsgemäße Verfahren zur Umformung eines Schichtstoffes zur Erzeugung eines wenigstens teilweise bedruckten, metallisierten und/oder sonst wie beschichteten dreidimensional verformten Folienteils (3D-Folienteil) eingesetzt werden. Insoweit betrifft eine dritte Ausgestaltung des erfindungsgemäßen Verfahrens
ein Verfahren zur Herstellung eines, wenigstens teilweise bedruckten, metallisierten und/oder sonst wie beschichteten, dreidimensional verformten Folienteils (3D-Folienteil),
mit wenigstens nachstehenden Verfahrensschritten:
- es wird ein ebenes, auf einer oder auf beiden Oberfläche(n) wenigstens teilweise bedrucktes, metallisiertes und/oder sonst wie beschichtetes Folienstück aus thermoplastischem Kunststoff bereitgestellt, das wenigstens einen Folienabschnitt umfasst, der hinsichtlich Größe und Bedruckung, Metallisierung und/oder Beschichtung dem herzustellenden 3D-Folienteil entspricht,
   wobei dieser Folienabschnitt wenigstens einen randnahen Bereich aufweist, in dem die Kunststofffolie und die mit ihr verbundene Bedruckung, Metallisierung und/oder Beschichtung beim Verformungsvorgang umgeformt wird (randnaher, zu verformender Bereich);
- innerhalb des Folienstückes, außerhalb des Folienschnittes und benachbart sowie im Abstand zu diesem randnahen, zu verformenden Bereich wird wenigstens ein, das Folienstück längs einer begrenzten Länge durchtrennender Schnitt erzeugt;
- das mit diesem oder diesen Schnitt(en) versehene Folienstück wird in definierter Anordnung an einem Rahmen angebracht, wobei lediglich die randseitigen Abschnitte des Folienstückes auf dem Rahmen aufliegen;
- das so auf dem Rahmen aufliegende Folienstück wird in eine Heizzone eingebracht, und dort wenigstens der Folienabschnitt auf eine vorgegebene Temperatur erwärmt;
- das so auf dem Rahmen aufliegende ebene und erwärmte Folienstück wird innerhalb eines Werkzeugs umgeformt, wobei wenigstens der Folienabschnitt an eine Kontur einer vorgegebenen Formfläche des Werkzeugs angelegt und zum 3D-Folienteil umgeformt wird; und
- überschüssige, das 3D-Folienteil umgebende Teile des Folienstückes werden abgetrennt und entfernt;
wobei die Umformung mit Hilfe von fluidem Druckmittel unter einem Druckmitteldruck größer 20 bar innerhalb einer Zeitspanne kleiner 5 Sekunden bewirkt wird.

Weil beim erfindungsgemäßen Verfahren die 3D-Strukturen im randnahen Bereich vor allem durch Abwicklung erzeugt werden, kann die ansonsten zur Erzeugung dieser 3D-Strukturen notwendige Dehnung und Streckung der Folie weitgehend bis weitestgehend vermieden werden. Die zum Ausgleich dieser Dehnung notwendigen Maßnahmen, wie etwa Zerrdruck, können vermieden werden. Eine gegebenenfalls in diesem randnahen umgeformten Bereich vorhandene Bedruckung, Metallisierung und/oder sonstige Beschichtung kann in feinen, delikaten, empfindlichen Mustern ausgeführt werden, ohne dass eine Beeinträchtigung oder Schädigung dieser Muster befürchtet werden müsste, die ansonsten bei einer Dehnung der Folie und der damit fest verbundenen Bedruckung, Metallisierung und/oder sonstigen Beschichtung kaum vermeidbar wären. Weil eine Folienausdünnung im randnahen umgeformten Bereich weitgehend vermieden werden kann, bleibt die Isolierwirkung der Folie erhalten; ihre Durchschlagsfeldstärke wird nicht beeinträchtigt; dies ist gerade für die eingangs erwähnten Folienverbundstoffe mit Elektrolumineszenz-Elementen bedeutsam.

Es versteht sich von selbst, dass die Vermeidung einer Schichtdickenabnahme im randnahen umgeformten Bereich nicht davon abhängig ist, dass dieser Bereich mit einer Bedruckung, Metallisierung und/oder sonstigen Beschichtung versehen ist. Die vorliegende Erfindung erfasst daher auch 3D-Folienteile der vorstehend angegebenen Art, an denen der randnahe umgeformte Bereich nicht mit einer solchen Bedruckung, Metallisierung und/oder sonstigen Beschichtung versehen ist.

Bevorzugt sind jedoch 3D-Folienteile der vorstehend angegebenen Art, an denen der randnahe umgeformte Bereich wenigstens teilweise mit einer solchen Bedruckung, Metallisierung und/oder sonstigen Beschichtung versehen ist, weil die Erfindung gerade hier Probleme löst und feine, delikate, empfindliche Muster ermöglicht, die sich ansonsten kaum realisieren lassen.

Weitere vorteilhafte Ausgestaltungen und Weiterbildungen der Erfindung sind Gegenstand der Unteransprüche.

In den nachfolgenden Ausführungen sollen die Angaben Schichtstoff, Schichtstoffstück und Schichtstoffabschnitt auch die als Schichtstoff einsetzbare, wenigstens teilweise bedruckte, metallisierte und/oder sonst wie beschichtete Folie, bzw. ein Stück oder einen Abschnitt aus einer solchen Folie einschließen, ohne dass das jeweils im einzelnen ausgeführt ist.

Beim erfindungsgemäßen Verfahren und bei den vorstehend erläuterten Ausgestaltungen dieses Verfahrens ist vorzugsweise vorgesehen, dass das an dem Rahmen angebrachte ebene Schichtstoffstück zusätzlich mit einer Membranfolie versehen ist oder wird, die lose auf dem Schichtstoffstück aufliegt;
zur Umformung diese Membranfolie unmittelbar und direkt mit dem fluiden Druckmittel unter einem Druckmitteldruck größer 20 bar beaufschlagt wird; und
die so beaufschlagte Membranfolie wenigstens den Schichtstoffabschnitt an die Kontur der Formfläche bzw. an die Oberfläche des 3D-Trägerteils anschmiegt.

Typischerweise wird ein Membranfolienstück verwendet, das wenigstens die Abmessungen und Größe des Schichtstoffstückes hat, das ebenfalls (über dem Schichtstoffstück) auf dem Rahmen aufliegt und das beim Einbringen des Rahmens in das Werkzeug zwischen den je korrespondierenden umlaufenden Dichtflächen einer oberen Werkzeughälfte und einer unteren Werkzeughälfte eingespannt wird. Die Membranfolie dient als Dichtmittel und verhindert, dass das unter hohem Druckmitteldruck eingesetzte fluide Druckmittel durch den oder die Schnitt(e) in dem Schichtstoffstück hindurchtritt. Mit der Anwendung der Membranfolie können auch poröse oder durchlässige Schichtstoffe, wie etwa Web- und Wirkwaren, Vliese, Holzfurniere und dergleichen unter den Bedingungen des HPF-Verfahrens umgeformt werden.

Vorzugsweise kann die Membranfolie aus einem Material bestehen, das aus einer Gruppe ausgewählt ist, die umfasst: Silikonmaterialien; Polyvinylchlorid (PVC); Polypropylen (PP); Polyethylen (PE); Polycarbonat (PC); Polymethylmethacrylat (PMMA); Acrylnitril-Butadien-Styrol-Copolymere (ABS); Blends aus PC und ABS; Copolymerisate aus Tetrafluorethylen und Hexafluorpropylen (FEP); Polytetrafluorethylen (PTFE); Polyamid (PA); Polyethylenterephthalat (PET); sonstige thermoplastische Elastomere (TPE) und thermoplastische Polyurethanmaterialien (TPU).

Besonders bevorzugte Membranfolienmaterialien sind PC, PMMA, PP und Blends aus PC und ABS.

Sofern eine Erwärmung des Schichtstoffes vor seiner Umformung vorgesehen ist, kann auch die Membranfolie gemeinsam mit dem Schichtstoff erwärmt werden. Es wird ein Membranfolienmaterial ausgewählt, das für eine solche Erwärmung und die nachfolgende Umformung im erwärmten Zustand geeignet ist.

Die Membranfolie soll gute Verformbarkeit, hohe Dehnbarkeit und eine höhere Rissfestigkeit aufweisen, als der umzuformende Schichtstoff. Die Membranfolie soll an dem Schichtstoff eher wenig haften. Im Verlauf der Umformung auftretende Bewegungskomponenten der Membranfolie sollen möglichst wenig auf den Schichtstoff übertragen werden. Folglich wird eine mattierte, leicht aufgeraute oder leicht strukturierte Oberfläche der Membranfolie bevorzugt.

Soweit vorstehende Eigenschaften gegeben sind, werden vorzugsweise Membranfolien mit einer Schichtdicke von 50 µm bis 650 µm eingesetzt; besonders bevorzugt sind hier Schichtdicken von 125 µm bis 375 µm.

Die Auswahl der Membranfolie wird auch durch das Schichtstoffmaterial beeinflusst; beispielsweise hat sich für den Schichtstoff Aluminium eine 250 µm starke Membranfolie aus PC gut bewährt und wird vorzugsweise eingesetzt. Im Einzelfall können als Membranfolie auch zweilagige Verbundstrukturen eingesetzt werden, wobei die eine Lage für geringe Haftung am Schichtstoff sorgt, und die andere Lage hohe Dehnbarkeit und Rissfestigkeit gewährleistet.

Nach dem Umformvorgang könnte die Membranfolie als temporäre Schutzfolie am Produkt verbleiben, oder sie kann abgenommen und gegebenenfalls bei einem nachfolgenden Umformvorgang wieder verwendet werden, weil der Umformvorgang als solcher die Membranfolie nicht schädigt.

Die Auswahl des beim erfindungsgemäßen Verfahren einsetzbaren Schichtstoffes ist nicht besonders beschränkt. Weil das erfindungsgemäße Verfahren die Zug- und Dehnungsbeanspruchung vermindert, können auch solche Schichtstoffe umgeformt werden, die bei einer herkömmlichen Umformung (ohne Zugentlastung durch Erzeugung der Schnitte) unter HPF-Bedingungen zur Rissbildung neigen würden. Wird eine Doppelschicht aus Membranfolie und Schichtstoff erfindungsgemäß umgeformt, so können auch poröse und gasdurchlässige Schichtstoffe umgeformt werden.

Mehr beispielsweise und ohne darauf beschränkt zu sein, können nach dem erfindungsgemäßen Verfahren Schichtstoffe umgeformt werden, die aus einer Gruppe ausgewählt sind, die umfasst:
- einlagige Folien und mehrlagige Verbundfolien, je aus thermoplastischem Kunststoffen und deren Blends;
- einlagige Folien und mehrlagige Verbundfolien, je aus thermoplastischen Kunststoffen und deren Blends, die zusätzlich mit einer wenigstens teilweisen Bedruckung, Metallisierung und/oder sonstigen Beschichtung versehen sind;
- Furniere aus Holz, hier auch Edelholzfurniere;
- Leder und Kunstleder, einschließlich ALCANTARA^{®};
- Schicht- und Plattenmaterialien aus Naturwerkstoffen, wie Kork, Hanf, Flachs und Bambus;
- Platten und Folien aus Metall, wie Aluminium, Magnesium, AI/Mg-Legierungen, Edelstahl, Kupfer und Titan;
- Echtsteinfurniere und -schichten;
- Papier, Pappe und Karton;
- Fasermaterialien aus Naturfasern, Kunststofffasern, Glasfasern, Stein- und Keramikmaterialien sowie Kohlenstoff (Carbon), etwa in der Form von textilen Materialien (Web- und Wirkwaren), Vliese und sonstige Wirrfaserlagen, sowie mit derartigen Fasermaterialien verstärkte Kunststoffe;
- Verbundwerkstoffe, wie etwa Laminate aus Holz und Kunststoff, Laminate aus Holz und Fasermaterialien, sowie Laminate aus Stein- und Keramikmaterialien mit Fasermaterialien.

Die vorstehend genannten Schichtstoffe können ganz unterschiedliche Schichtdicken aufweisen, um unter den Bedingungen des HPF-Verfahrens umformbar zu sein. Für einlagige Folien aus thermoplastischem Kunststoff, wie etwa PC oder PMMA werden typischerweise Schichtdicken von 100 µm bis 1000 µm vorgesehen;
noch weiter bevorzugt sind hier Schichtdicken von 250 µm bis 500 µm vorgesehen.

Natürliches Leder, etwa vertrieben von Kuraray, Japan oder Kunstleder einschließlich ALCANTARA® kann typischerweise mit Schichtdicken von 200 µm bis 600 µm verarbeitet werden.

Schicht- und Plattenmaterialien aus Naturwerkstoffen, wie Kork, Hanf, Flachs oder Bambus, sind typischerweise auf eine Trageschicht aus Polyesterharz oder auf einem Vlies aus Polyesterfasern und Glasfasern aufgebracht und können gemeinsam mit dieser Trageschicht eine Schichtdicke von 400 µm bis 1000 µm aufweisen, insbesondere Schichtdicken von 500 µm bis 750 µm aufweisen.

Für Platten und Folien aus Metall werden typischerweise Schichtdicken von 100 µm bis 800 µm vorgesehen; noch weiter bevorzugt sind hier Schichtdicken von 200 µ bis 375 µm.

Für eine Umformung geeignete Echtsteinfurniere und -schichten, beispielsweise aus speziellem Sandstein oder aus Schiefer können typischerweise Schichtdicken 400µm bis 800 µm vorgesehen werden; derartige Echtsteinfurniere können beispielsweise handelsüblich von Richter Furnierttechnik GmbH, DE 49326 Melle bezogen werden.

Für Schichten aus den oben genannten Fasermaterialien können typischerweise Schichtdicken von 400 µm bis 1000 µm vorgesehen werden.

Die erfindungsgemäß vorgesehene Umformung erzeugt an solchen anfänglich ebenen Schichtstoffen wenigstens eine angehobene und/oder abgesenkte Struktur (3D-Struktur) bezüglich der ursprünglichen Schichtstoffebene. Typischerweise wird bei Formflächen bis zu etwa 800 cm² die maximale Höhe oder Tiefe einer solchen 3D-Struktur etwa 5 mm bis 20 mm betragen. Die maximale Höhe oder Tiefe wird typischerweise bereits im randnahen, umzuformenden Bereich erreicht; auf diese Weise werden typischerweise schalenförmige, wannenförmige oder tellerförmige Formkörper erhalten, ohne dass die Erfindung darauf beschränkt ist.

Vorzugsweise kann der randnahe umgeformte Bereich am 3D-Formteil eine Breite haben, die bis zum Zweifachen der hier auftretenden Höhe bzw. Tiefe der Ausformung gegenüber der Schichtstoffebene ausmacht.

So kann vorzugsweise vorgesehen sein, den Schnitt in einem solchen Abstand zum Rand des Schichtstoffabschnittes zu erzeugen, der im Wesentlichen derjenigen Tiefe entspricht, zu der das Schichtstoffstück umgeformt werden soll. Sofern diese Tiefe 5 bis 10 mm beträgt, kann der Schnitt in einem Abstand von etwa 4 bis 12 mm zum Rand des Schichtstoffabschnittes erzeugt werden. Wird der Schnitt in einem solchen Abschnitt erzeugt, so wird einerseits eine deutliche Verminderung der Dehnungsbeanspruchung des Schichtstoffes im umgeformten Bereich erzielt, sowie andererseits eine Bildung von Falten am Rand des umgeformten Bereichs vermieden.

Nach einer weiteren vorteilhaften Ausgestaltung wird der Schnitt über eine Länge erzeugt, die größer ist als die Länge des randnahen umzuformenden Bereiches am Schichtstoffabschnitt. Soll beispielsweise an dem ursprünglich ebenen Schichtstoffstück durch isostatische Umformung ein erhabenes quaderförmiges 3D-Formteil erzeugt werden, das gegenüberliegende Schmalseiten und gegenüberliegende Längsseiten aufweist, so ist es zweckmäßig, je einen Schnitt benachbart und im Abstand zu den beiden Schmalseiten zu erzeugen. Wird in einem solchen Falle jeder Schnitt über eine Länge erzeugt, die größer ist als die Länge der Schmalseite, so kann eine Verminderung der Dehnungsbeanspruchung des Schichtstoffes erreicht werden, die auch die Eckenbereiche, also den Übergang von der Schmalseite in die Längsseite einschließt.

Weiterhin ist es in einem solchen Falle vorteilhaft, zwei derartige Schnitte zu erzeugen, nämlich einen Schnitt benachbart und im Abstand zu der einen Schmalseite und einen weiteren anderen Schnitt benachbart und im Abstand zur gegenüberliegenden Schmalseite. In einem solchen Falle wird eine Verminderung der Dehnungsbeanspruchung des Schichtstoffes in den beiden randnahen umzuformenden Bereichen an beiden Schmalseiten und den jeweiligen Übergängen in die Längsseiten erzielt.

Im Falle des vorstehenden Beispiels ist es auch möglich, Schnitte zu erzeugen, welche die Eckenbereiche zwischen je einer Schmalseite und der angrenzenden Längsseite umgreifen, und die sich mit ihren Schnittendabschnitten in Längsrichtung erstrecken: Die mit der isostatischen Umformung verbundene Dehnungsbeanspruchung kann in einem noch größeren randnahen und umzuformenden Bereich des Schichtstoffabschnitts vermindert werden.

Nach einer weiteren bevorzugten Ausführungsform des erfindungsgemäßen Verfahrens ist es auch möglich, um den gesamten Umfang des umzuformenden Schichtstoffabschnitts herum eine ganze Anzahl Schnitte begrenzter Länge zu erzeugen. Anzahl, Länge und Anordnung dieser Schnitte werden so auf die Geometrie des herzustellenden 3D-Formteils abgestimmt, damit bei der isostatischen Umformung nach dem HPF-Verfahren im wesentlichen keine Dehnungsbeanspruchung des umzuformenden Schichtstoffabschnitts stattfindet, und die ansonsten unvermeidbare Schichtstoffausdünnung reduziert ist. Zwischen aufeinander folgenden Schnitten verbleibt nur ein Steg begrenzter Breite. Diese Breite wird so gewählt, dass der Schichtstoffabschnitt immer noch seine vorgesehene Positionierung einnimmt und beibehält, wenn das Schichtstoffstück in definierter Anordnung an dem Rahmen angebracht wird. In dem gesamten randnahen Bereich am Schichtstoffabschnitt kann die Dehnungsbeanspruchung des Schichtstoffmaterials vermindert oder weitgehend beseitigt werden, die ansonsten im Falle der Schaffung neuer Flächen bei der isostatischen Umformung auftritt.

Bei einer typischen Arbeitsweise werden auf einem großen Bogen oder auf einer breiten Bahn eines ebenen Folienmaterials eine Vielzahl, je identischer Bedruckungen, Metallisierungen und/oder sonstige Beschichtungen aufgebracht, die das herzustellende 3D-Folienteil aufweisen soll. Anschließend wird jede Bedruckung, jede Metallisierung und/oder jede sonstige Beschichtung unter Einbeziehung eines hinreichend breiten Randabschnittes zu einem Folienstück vereinzelt. In diesem Randabschnitt werden mehrere Positionierlöcher erzeugt, mit deren Hilfe die definierte Anordnung des Folienstückes am Rahmen gewährleistet wird, bei welcher später die Bedruckung, Metallisierung und/oder Beschichtung exakt gegenüber der zugeordneten Position an der Form in der Verformungszone positioniert ist.

Nach einer weiteren vorteilhaften Ausführungsform des erfindungsgemäßen Verfahrens kann jeder Schnitt anlässlich und gemeinsam mit der Erzeugung dieser Positionierlöcher im randseitigen Abschnitt des Folienstückes erzeugt werden, die zur definierten Anordnung des Folienstückes am Rahmen benötigt werden. Dadurch kann ein zusätzlicher Arbeitsschritt zur Erzeugung des Schnittes oder der Schnitte vermieden werden.

Vorzugsweise kann der Schnitt mit Hilfe einer Klinge, einer Stanzvorrichtung oder mit einem Laserschneidgerät erzeugt werden. Zur Erzeugung des Schnittes können übliche Schneid- und Stanzvorrichtungen eingesetzt werden, die gewährleisten, dass der Schnitt das Folienstück längs der vorgesehenen Länge vollständig durchtrennt.

Bei der isostatischen Umformung wird der am Folienstück befindliche Folienabschnitt zu dem 3D-Folienteil umgeformt. Anschließend wird der Rahmen wieder aus der Verformungszone herausgefahren, das Folienstück wird vom Rahmen entfernt, und an dem 3D-Folienteil noch anhaftende Teile des Folienstückes werden entfernt; dies kann beispielsweise durch Stanzen, Beschneiden, Laserschneiden, Wasserstrahlschneiden oder Fräsen geschehen. Das heißt, der das 3D-Folienteil umgebende Randabschnitt des Folienstückes wird entfernt. In diesem Randabschnitt befindet sich der Schnitt oder die Schnitte und je eine angrenzende trapezförmige Aussparung in dem Folienmaterial. Schnitt(e) und trapezförmige Aussparung(en) werden zusammen mit dem abzutrennenden Randabschnitt entfernt und beeinträchtigen die Qualität des hergestellten 3D-Folienteils nicht.

Ein besonders bevorzugtes Erzeugnis des erfindungsgemäßen Verfahrens ist ein 3D-Folienteil, das nach Hinterspritzung mit weiterem Kunststoff ein schalenförmiges, für ein mobiles Telekommunikationsgerät bestimmtes Gehäuseteil bildet. Dieses 3D-Folienteil hat eine im Wesentlichen ebene Rückenwand und eine damit einstückig und abgerundet verbundene Seitenwand, die sich wenigstens längs eines Teils des Rückenwandumfanges erstreckt und senkrecht zur Rückenwandebene ausgerichtet ist. Die hier vorgesehene Metallisierung bildet eine flächige Antennenstruktur, die vor allem an der Innenseite der Rückenwand anliegt, wobei jedoch Teile der Antennenstruktur, Signalleitungen, Verbindungsleitungen zu elektrischen Anschlüssen und/oder solche flächigen elektrischen Anschlüsse auch an der Innenseite von Seitenwandabschnitten anliegen.

Vorzugsweise ist diese, die metallische flächige Antennenstruktur, die Signalleitungen, die Verbindungsleitungen zu elektrischen Anschlüssen und/oder derartige flächige elektrische Anschlüsse bildende Metallisierung mit Hilfe einer, elektrisch leitende Metallpartikel enthaltenden Siebdruckpaste im Siebdruckverfahren auf der ebenen Kunststofffolie aufgebracht worden.

Nach einer weiteren vorteilhaften Ausgestaltung dieses 3D-Folienteils kann diese Metallisierung auf einer, vorher auf der ebenen Kunststofffolie aufgebrachten Dekorschicht aufgebracht werden. Diese Dekorschicht kann in einem Schritt oder in mehreren Schritten auf einer transparenten Folie aufgebracht werden. Für diese Aufbringung bietet sich beispielsweise Siebdruck, Tiefdruck. Transferdruck oder Digitaldruck (einschließlich dem in DE 103 27 453 A1 beschriebenen Digitaldruckverfahren) an.

Auch in diesem Falle vermindert der oder die benachbart und im Abstand zum randnahen umzuformenden Bereich erzeugte(n) Schnitt(e) ganz wesentlich die Dehnungsbeanspruchung des Folienmaterials in diesem randnahen umzuformenden Bereich und den angrenzenden Bereichen. Auch die mechanische Beanspruchung der fest mit der Oberfläche der Kunststofffolie verbundenen Metallisierung wird ganz wesentlich vermindert. Es wird möglich, diese Metallisierung in Form von längeren schmalen Bahnen zu erzeugen, wie sie etwa für mäanderförmige Antennenstrukturen, Signalleitungen und/oder Verbindungsleitungen zu elektrischen Anschlüssen benötigt werden. Es wird möglich, derartige mäanderförmige Antennenstrukturen, Signalleitungen und/oder Verbindungsleitungen mit einer Breite von 1 mm oder einer Breite kleiner 1 mm und einer Länge größer 10 mm, und bei einer Schichtdicke von lediglich 10 µm zu erzeugen, ohne dass bei der isostatischen Umformung Risse, Brüche oder sonstige Schäden an diesen mäanderförmigen Antennenstrukturen, an diesen Signalleitungen, Verbindungsleitungen und dergleichen auftreten. Die Schadensfreiheit kann anhand der elektrischen Leitfähigkeit dieser metallischen Strukturen am fertigen 3D-Folienteil überprüft werden.

### DETAILLIERTE ERLÄUTERUNG DER VORLIEGENDEN ERFINDUNG

Nachfolgend wird die vorliegende Erfindung mehr im Einzelnen mit Bezugnahme auf Zeichnungen erläutert; es zeigen:
- Fig. 1: ein ebenes Folienstück, das teilweise mit einer Gitternetzstruk- tur bedruckt ist, wobei sich etwa mittig im Folienstück ein um- zuformender Folienabschnitt befindet;
- Fig. 2: das Folienstück nach Fig. 1, nachdem an dessen Folienab- schnitt mit Hilfe isostatischer Umformung ein erhabenes 3D- Folienteil in Form eines rechteckigen Quaders mit einer Höhe von etwa 7 mm ausgeformt worden ist;
- Fig. 3: eine Schnittansicht längs der Schnittlinie A-A in Fig. 2, um die leichte Wölbung der Rückenwand des Quaders darzustellen;
- Fig. 4: das Folienstück nach Fig. 1, nachdem an dessen Folienab- schnitt mit Hilfe isostatischer Umformung ein erhabenes 3D- Folienteil in Form eines rechteckigen Quaders mit einer Höhe von 10,5 mm ausgeformt worden ist;
- Fig. 5: das, benachbart und im Abstand zu den beiden Schmalseiten des Folienabschnitts mit je einem Schnitt versehene Folienstück nach Fig. 1, nachdem an dessen Folienabschnitt mit Hilfe isostatischer Umformung ein erhabenes 3D-Folienteil in Form eines rechteckigen Quaders mit einer Höhe von etwa 7 mm ausgeformt worden ist;
- Fig. 6: eine Darstellung ähnlich der Fig. 5, wobei hier jedoch längere Schnitte vorgesehen sind, die mit ihren Endabschnitten auch die abgerundeten Eckenbereiche des Folienabschnitts umgrei- fen, so dass sich diese Schnittendabschnitte in Längsrichtung des Quaders erstrecken;
- Fig. 7: in einer ähnlichen Darstellung wie Fig. 1 eine alternative Ausführungsform, bei welcher der Folienabschnitt längs seines gesamten Umfangs von einer ganzen Anzahl Schnitte begrenzter Länge umgeben ist, zwischen denen lediglich relativ schmale Stege verbleiben;
- Fig. 8: in einer schematischen Schrägansicht einen Ausschnitt aus einem 3D-Folienteil, das nach Hinterspritzung mit weiterem Kunststoff ein schalenförmiges Gehäuseteil für ein mobiles Telekommunikationsgerät bildet. An der Innenseite der Rückenwand und an der Innenseite der Seitenwandabschnitte des 3D-Folienteils befinden sich metallische flächenförmige Antennenstrukturen, Signalleitungen, Verbindungsleitungen zu elektrischen Anschlüssen und solche flächigen elektrischen Anschlüsse;
- Fig. 9: an Hand einer schematischen Schnittdarstellung ein Formwerk- zeug zur Durchführung der erfindungsgemäß vorgesehenen Umformung, wobei das Formwerkzeug zwei Werkzeughälften aufweist, die voneinander entfernt dargestellt sind (Offen- stellung des Formwerkzeugs); und
- Fig.10: die Schließstellung des Formwerkzeugs nach Fig. 9.

Die Figur 1 zeigt ein ebenes Folienstück 1, das teilweise mit einer Bedruckung versehen ist. Im Zentrum des Folienstücks 1 befindet sich ein im wesentlichen rechteckiger, mit Abrundungen an den Ecken versehener Folienabschnitt 2, der ebenfalls mit der Gitterstruktur bedruckt ist. Diese Gitterstruktur besteht aus geraden, orthogonal zueinander verlaufenden Längslinien 6 und Querlinien 7, einschließlich der Querlinien 7', 7" und 7"'. Dieser Folienabschnitt 2 hat gegenüberliegende Schmalseiten 3 und 3' sowie orthogonal dazu gegenüberliegende Längsseiten 5 und 5'. An jede Schmalseite 3, 3' grenzt ein randnaher, umzuformender Bereich 4 bzw. 4' an. In der Mitte der Schmalseite 3 ist mit Hilfe der Schraffur 8 ein Messbereich angedeutet, in dem eine Schichtdickenmessung des randnahen umzuformenden bzw. umgeformten Bereichs 4 vorgenommen wird. Im Randbereich des Folienstückes 1 sind mehrere Positionierlöcher 9 ausgestanzt.

Die Figur 2 zeigt das Folienstück 1, nachdem an dessen Folienabschnitt 2 mit Hilfe isostatischer Umformung ein erhabenes 3D-Folienteil in Form eines rechteckigen Quaders 10 erzeugt worden ist, der eine Höhe von etwa 7 mm hat. Dieser Quader 10 hat eine leicht gewölbte Rückenwand 11 und eine damit einstückig und abgerundet verbundene Seitenwand 12, die sich längs des gesamten Rückenwandumfangs erstreckt und senkrecht zur Rückenwandebene ausgerichtet ist. Diese Seitenwand 12 hat kürzere Seitenwandabschnitte 13 und 13', sowie orthogonal dazu längere Seitenwandabschnitte 14 und 14'.

Zur Erzeugung dieses quaderförmigen 3D-Folienteils 10 wird hier - und in weiteren Beispielen dieser Art - eine 250 µm starke PC-Folie (Makrofol® von BAYER AG) eingesetzt. Beim Verlassen der Heizzone weist der umzuformende Folienabschnitt 2 an diesem Folienstück 1 eine Folienoberflächentemperatur von 155 °C auf. Das zur Umformung des Folienabschnitts 2 dienende Formstück in der Verformungszone hat eine Temperatur von 120 °C. Die Druckluft hat beim Auftreffen auf den umzuformenden Folienabschnitt 2 eine Temperatur von etwa 70 °C. Zum Umformen wird ein Druckluftdruck von 150 bar angewandt.

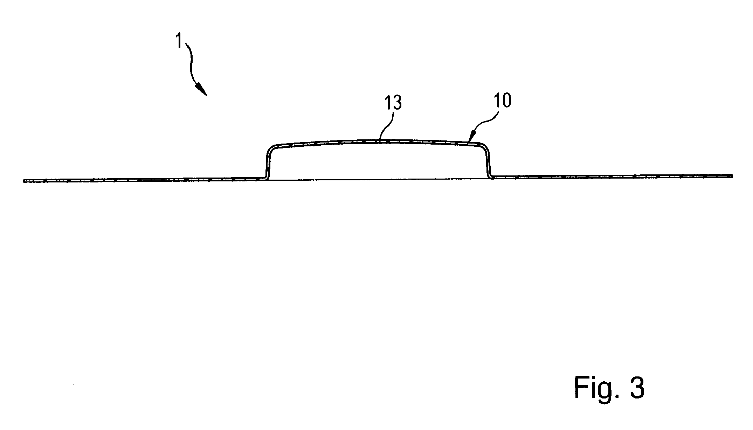

Die Figur 3 zeigt anhand einer Schnittdarstellung die leichte Wölbung der Rückenwand 11 an diesem Quader 10.

Die Figur 4 entspricht weitgehend der Figur 2, jedoch hat hier der Quader 10 eine Höhe von 10,5 mm.

Die Bildung des Quaders 10 an dem ursprünglichen Folienabschnitt 2 erfordert die Schaffung der umlaufenden Seitenwand 12. Diese Seitenwand 12 wird neu gebildet, wozu Folienmaterial aus der Umgebung herangeschafft werden muss. Diese Umgebung umfasst auch die randnahen, umzuformenden Bereiche 4 und 4' am Folienabschnitt 2. Diese Umgebung wird auf Dehnung beansprucht, wie eingangs beschrieben. Diese Dehnungsbeanspruchung lässt sich gut an der Krümmung der ursprünglich geraden Querlinien 7' und 7" ablesen. Auch zeigt ein Vergleich der Figuren 2 und 4, dass die Schaffung der neuen Seitenwand 12 mit der größeren Höhe von 10,5 mm in Figur 4 eine stärkere Dehnungsbeanspruchung der Umgebung verursacht, was sich an der stärkeren Krümmung der Querlinien 7', 7" und 7"' in Figur 4 ablesen lässt. Im Messbereich 8 wird am Quader 10 nach Fig. 2 eine Schichtdicke von etwa 150 µm gemessen.

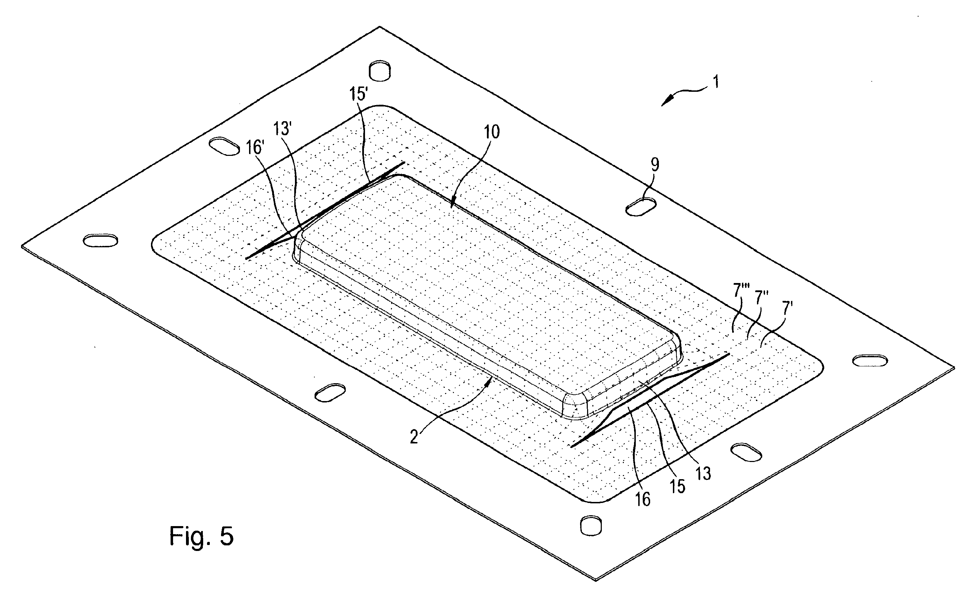

Hinsichtlich der Erzeugung des 3D-Folienteils in Form des Quaders 10 entspricht die Figur 5 der Figur 2. Jedoch ist hier noch am ebenen Folienstück 1 vor der definitiven Anordnung am Rahmen und vor der isostatischen Umformung je ein Schnitt 15 bzw. 15' benachbart und im Abstand zur Schmalseite 3 bzw. 3' erzeugt worden. Wie dargestellt, ist die Länge der Schnitte 15 bzw. 15' größer als die Länge der Schmalseiten 3 bzw. 3'. Die im Verlauf der isostatischen Umformung auftretende Dehnungsbeanspruchung des Folienmaterials erweitert jeden Schnitt 15, 15' zu einer trapezförmigen Aussparung 16 bzw. 16', die in Figur 5 eine Höhe/Breite von etwa 4 mm hat. Die Bildung dieser Aussparung 16 bzw. 16' ersetzt Folienmaterial, das ansonsten zur Bildung der kürzeren Seitenwandabschnitte 13 bzw. 13' herangeschafft werden müsste. Die Erzeugung der Schnitte 15, 15' und die dadurch ermöglichte Bildung der Aussparungen 16, 16' vermindert bei der isostatischen Umformung die Dehnungsbeanspruchung des Folienmaterials im randnahen Bereich 4, 4' und dessen Umgebung am Folienabschnitt. Im Messbereich 8 am Quader 10 nach Fig. 5 wird eine Schichtdicke von etwa 240 µm gemessen.

Die Verminderung dieser Dehnungsbeanspruchung lässt sich gut an einem Vergleich der Krümmung der Querlinien 7', 7" und 7"' in den Figuren 2 und 5 ablesen; trotz der Erzeugung des gleichen Quaders 10 mit je einem kurzen Seitenwandabschnitt 13 mit einer Höhe von 7 mm sind die Querlinien 7', 7" und 7"' in Fig. 5 wesentlich weniger gekrümmt als die entsprechenden Querlinien 7', 7" und 7"' in Fig. 2. Auch die nahezu unverminderte Schichtdicke am Seitenwandabschnitt 3 des Quaders 10 nach Fig. 5 ist ein Indiz für die weitgehende Abwesenheit einer Dehnungsbeanspruchung in diesem Bereich.

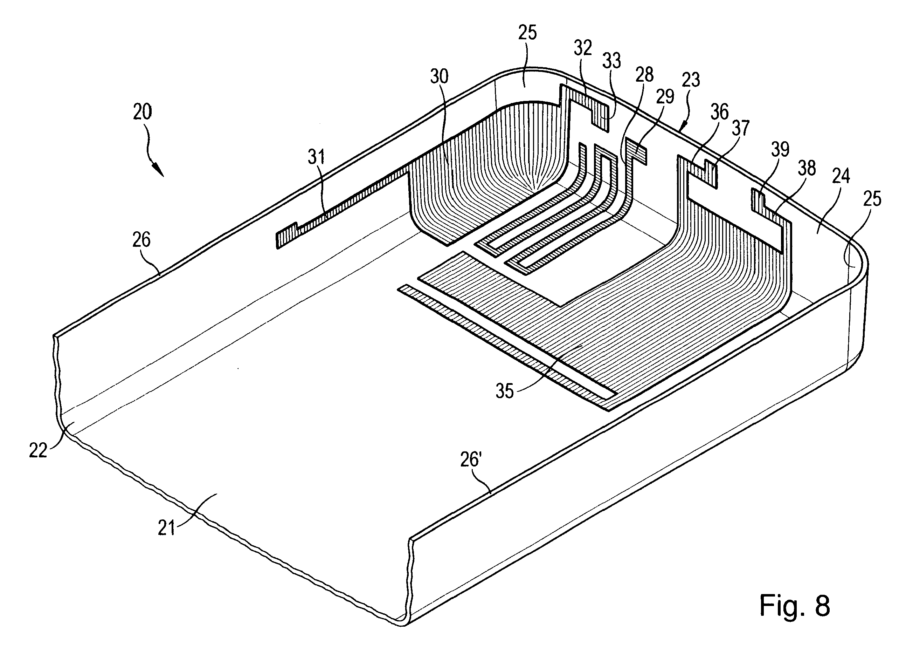

Die Verminderung der Dehnungsbeanspruchung des Folienmaterials auch im stark umgeformten randnahen Bereich 4, 4' kann ausgenutzt werden, um auch schmale, delikate, empfindliche Strukturen auf der Folie im stark umgeformten Bereich 4, 4' vorzusehen, ohne eine Schädigung dieser Strukturen bei der isostatischen Umformung befürchten zu müssen. Beispielhafte Strukturen sind in Fig. 8 dargestellt.

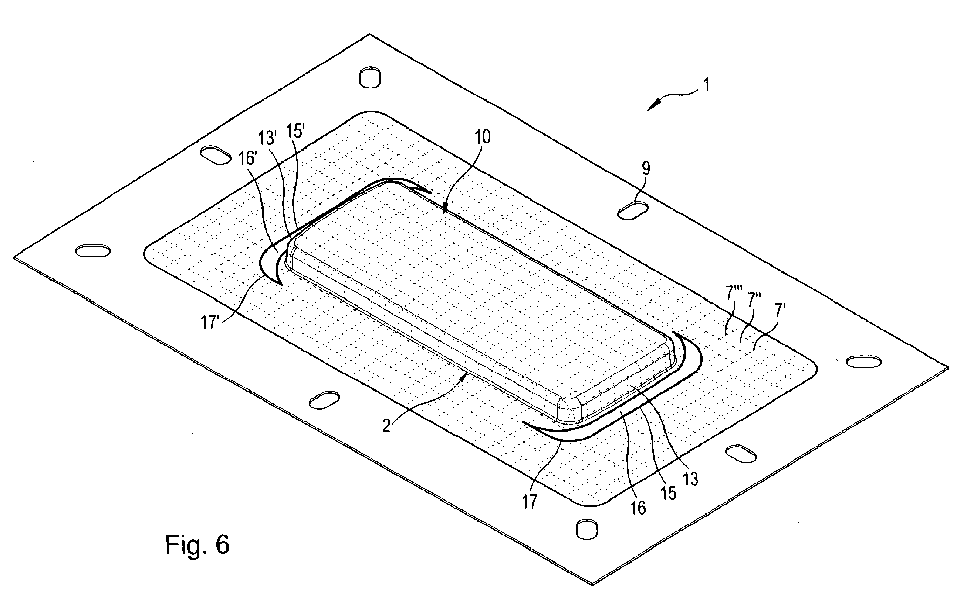

Die Fig. 6 verdeutlicht eine weitere Ausführungsform des erfindungsgemäßen Verfahrens. Hier sind längere Schnitte 17 und 17' vorgesehen, die auch die abgerundeten Eckenbereiche zwischen den kürzeren Seitenwandabschnitten 13, 13' und den längeren Seitenwandabschnitten 14, 14' umgreifen und die sich mit ihren Schnittendabschnitten in Längsrichtung des Quaders 10 erstrecken. Die Dehnungsbeanspruchung des Folienmaterials in diesen abgerundeten Eckenbereichen kann noch weiter vermindert werden.

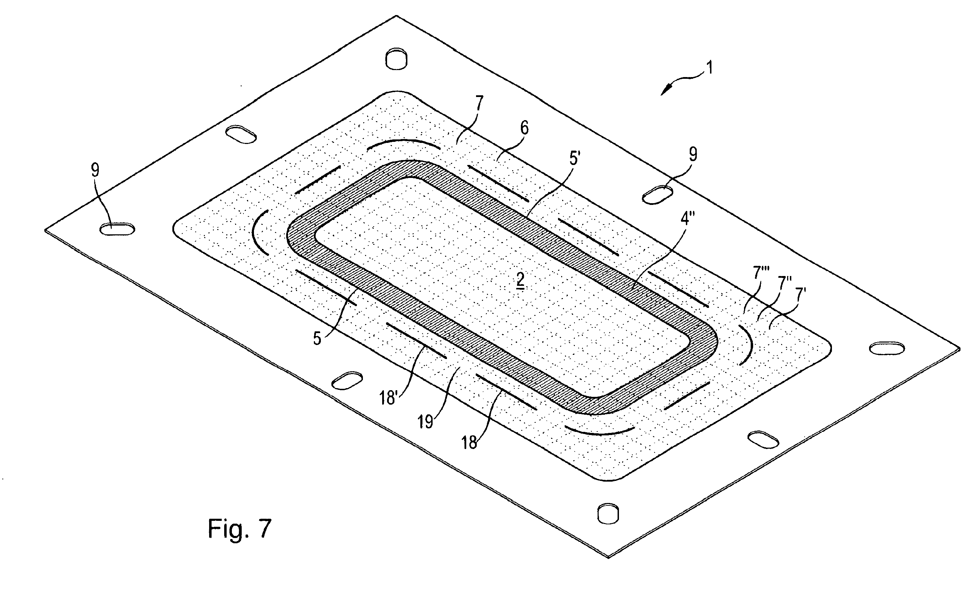

Die Fig. 7 verdeutlicht noch eine weitere Ausführungsform des erfindungsgemäßen Verfahrens. Hier werden am Folienstück 1 um den gesamten Umfang des umzuformenden Folienabschnitts 2 herum eine ganze Anzahl Schnitte 18 begrenzter Länge erzeugt, die benachbart und im Abstand zum gesamten randnahen und umzuformenden Bereich 4" am Folienabschnitt 2 angeordnet sind. Zwischen aufeinander folgenden Schnitten 18 und 18' verbleibt nur ein Steg 19 begrenzter Breite. Diese Breite wird so gewählt, dass der Folienabschnitt 2 immer noch seine vorgesehene Positionierung einnimmt und beibehält, wenn das Folienstück 1 in definierter Anordnung an dem Rahmen angebracht wird. Diese Ausführungsform gewährleistet eine Entlastung des gesamten umzuformenden Bereichs von der, bei der isostatischen Umformung auftretenden Dehnungsbeanspruchung des Folienmaterials.

Die Fig. 8 zeigt schematisch einen Ausschnitt aus einem 3D-Folienteil 20, das nach Hinterspritzung mit weiterem Kunststoff ein schalenförmiges Gehäuseteil 20 für ein mobiles Telekommunikationsgerät bilden wird; beispielsweise kann dieses Gehäuseteil eine Unterschale für ein Mobilfunktelefon sein. Das 3D-Folienteil 20 hat eine im wesentlichen ebene Rückenwand 21, an der über eine Abrundung 22 eine Seitenwand 23 einstückig angeformt ist, die sich längs des Rückenwandumfangs erstreckt und senkrecht zur Rückenwandebene ausgerichtet ist. Diese Seitenwand 23 hat einen kürzeren Seitenwandabschnitt 24, der über einen abgerundeten Eckenbereich 25 in je einen längeren Seitenwandabschnitt 26 und 26' übergeht. Dieses Gehäuseteil 20 ist mit Hilfe des vorstehend erläuternden erfindungsgemäßen Verfahrens aus einer 250 µm starken Polycarbonatfolie (Makrofol® von Bayer AG) erzeugt worden, an der benachbart und im Abstand zu den randnahen umzuformenden Bereichen 4 und 4" am Folienabschnitt 2 (der zum 3D-Folienteil 20 umgeformt worden ist) die beiden Schnitte 15 und 15' erzeugt worden sind. Wie lediglich schematisch dargestellt, befinden sich an der Innenseite der Rückenwand 21, an der Innenseite des kürzeren Seitenwandabschnittes 24 und an der Innenseite des längeren Seitenwandabschnittes 26 Metallisierungen, die hier bilden:
- ein, aus einem langen und schmalen Band bestehende mäanderförmige Antennenstruktur 28 mit einem flächenförmigen elektrischen Anschluss 29;
- ferner eine flächige Antennenstruktur 30, die sich angrenzend an die Abrundung 22 sowohl längs der Rückenwand 21, wie längs des längeren Seitenwandabschnittes 26 erstreckt; weiterhin bedeckt diese flächige Antennenstruktur 30 auch den abgerundeten Eckenbereich 25 zwischen dem kürzeren Seitenwandabschnitt 24 und dem längeren Seitenwandabschnitt 26; dieser Antennenstruktur 30 ist eine schematisch angedeutete Signalleitung 31 am längeren Seitenwandabschnitt 26 sowie eine Verbindungsleitung 32 mit flächigem, elektrischem Anschluss 33 an dem kürzeren Seitenwandabschnitt 24 zugeordnet; und
- eine flächige Antennenstruktur 35, die sich beidseitig zur Abrundung 22 an der Rückenwand 21 und am kürzeren Seitenwandabschnitt 24 erstreckt. Diese Antennenstruktur 35 weist am kürzeren Seitenwandabschnitt 24 je eine Verbindungsleitung 36 zu einem flächigen elektrischen Anschluss 37 sowie eine Verbindungsleitung 38 zu einem flächigen elektrischen Anschluss 39 auf. Eine solche Antennenstruktur 35 könnte beispielsweise zum Senden/Empfangen von GSM-Signalen verwendet werden.

Nach seiner Fertigstellung kann das schalenförmige 3D-Folienteil 20 an seiner konkaven Innenseite mit weiterem Kunststoff hinterspritzt werden, um ein stabiles Gehäuseteil zu erhalten; diese Hinterspritzung kann beispielsweise mit einer Schichtdicke von etwa 0,5 bis 2 mm aufgebracht werden. Das zum Hinterspritzen benutzte Formwerkzeug ist an den Positionen der flächigen elektrischen Anschlüsse 28, 33, 37 und 39 mit verstellbaren Schiebern versehen. Die ausgefahrenen Schieber verhindern, dass die Flächen der elektrischen Anschlüsse 28, 33, 37 und 39 beim Hinterspritzen mit Kunststoff mit diesem Kunststoff belegt werden. Nach Beendigung des Hinterspritzvorganges und Abkühlung des Formkörpers, werden diese Schieber zurückgefahren, um das Gehäuseteil aus der Spritzgießform entnehmen zu können.

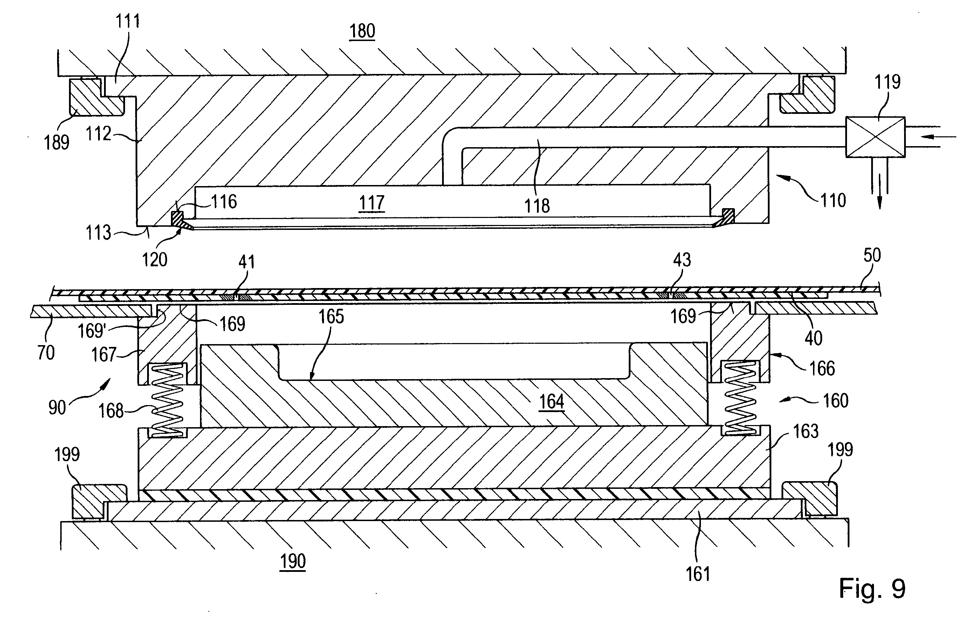

Die Fig. 9 zeigt ein zur Durchführung des erfindungsgemäßen Verfahrens geeignetes Formwerkzeug 90 in geöffnetem Zustand;

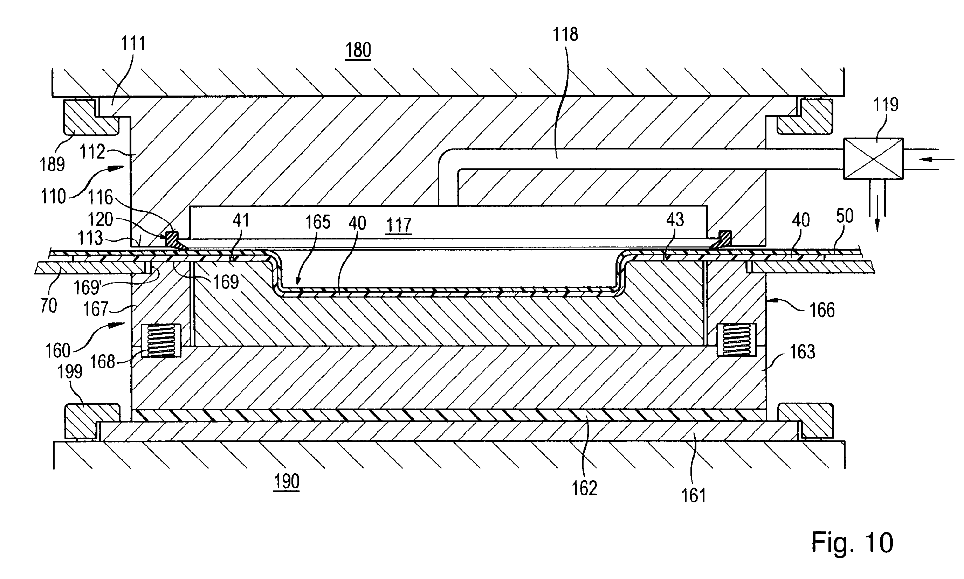

die Fig. 10 zeigt dieses Formwerkzeug 90 in geschlossenem Zustand nach Durchführung einer isostatischen Hochdruckumformung. Wie im Einzelnen aus den Figuren 9 und 10 ersichtlich, besteht das Formwerkzeug 90 im Wesentlichen aus einer ersten Formhälfte 110 und aus einer zweiten Formhälfte 160. Die erste Formhälfte 110 bildet eine Druckglocke und ist in einer Presse typischerweise oben angeordnet, so dass die offene Kaverne 117 der Druckglocke nach unten zeigt. Diese erste Formhälfte 110 hat einen abstehenden Halteflansch 111, der an einem umlaufenden Winkelprofil 189 gehalten ist, das seinerseits an einem oberen Formtisch 180 einer Presse 170 angebracht ist. Die Kaverne 17 der Druckglocke wird von einem umlaufenden Steg 112 begrenzt, dessen Stirnfläche eine umlaufende Dichtfläche 113 der ersten Formhälfte 110 bildet. In dieser Dichtfläche 113 ist - in geringem Abstand zur Kaverne 117 der Druckglocke - eine umlaufende Nut 116 ausgespart, in die eine umlaufende, strangförmige Profildichtung 120 eingesetzt ist. In die Kaverne 117 mündet ein Kanal 118, über den ein fluides Druckmittel zugeführt und wieder entfernt werden kann. Lediglich schematisch angedeutete Steuerorgane 119 regeln die Druckmittelversorgung. Das fluide Druckmittel kann eine erhöhte Temperatur aufweisen, insbesondere dann, wenn der zu verformende Schichtstoff bei der Beaufschlagung mit dem fluiden Druckmittel eine höhere Temperatur als die Umgebungstemperatur aufweist.

Dieses Formwerkzeug 90 hat eine zweite Formhälfte 160, die typischerweise unterhalb der ersten Formhälfte 110 angeordnet ist und sich auf einem unteren Formtisch 190 der Presse 170 abstützt. Zu dieser zweiten Formhälfte 160 gehört eine Tragplatte 161, eine Bodenplatte 163, und das eigentliche Werkzeug 164 mit der lediglich schematisch und beispielhaft angedeuteten Kontur 165 zur Erzeugung einer wannenförmigen Vertiefung in einem vorgelegten ebenen Schichtstoff. Dieses Werkzeug 164 ist von einer gefederten Muterform 166 umschlossen. Die Tragplatte 161 wird mit Hilfe der Winkelprofile 199 am unteren Formtisch 190 gehalten.

Die Mutterform 166 weist einen Rahmen 167 auf, der federnd auf Federn 168 abgestützt ist. Bei der dargestellten Ausführungsform begrenzen und definieren die Innenabmessungen des Rahmens 167 die Formfläche des Formwerkzeugs 90. Die obere Stirnfläche des Rahmens 167 bildet eine Auflagefläche 169 für den Schichtstoff 40. Dieser anfänglich ebene Schichtstoff 40 wird typischerweise an einem rahmenartigen Träger 70 gehalten, beispielsweise einer Palette. Am Außenumfang des Rahmens 167 der Mutterform 166 kann eine umlaufende, nach außen offene Stufe 169' ausgespart sein, in welche die rahmenartige Aussparung des Trägers 70 einsetzbar ist. Auf diese Weise kann der Träger 70 gegenüber der zweiten Formhälfte 160 des Formwerkzeugs 90 zentriert werden, wodurch eine passgenaue Anordnung des Schichtstoffes 40 bezüglich der Kontur 65 erhalten wird, an welche dieser Schichtstoff 40 angeformt werden soll.

Ein Formwerkzeug dieser Art kann in einer typischen Presse angeordnet sein, die beispielsweise in den Dokumenten DE 10 2008 050 654 A1 oder DE 41 13 568 C1 näher beschrieben ist.

Der passgenau bzw. der Kontur 165 angeordnete Schichtstoff 40 ist mit zwei, lediglich schematisch angedeuteten Schnitten 41 und 43 versehen; der eine Schnitt 41 erstreckt sich parallel und im Abstand zum Kopfende der Kontur 165; der andere Schnitt 43 erstreckt sich parallel und im Abstand zum Fußende der Kontur 165.

Auf dem Schichtstoff 40 liegt frei beweglich und verschiebbar eine Membranfolie 50 auf. Diese Membranfolie 50 bedeckt den gesamten Schichtstoff 40 und überdeckt auch die Schnitte 41 und 43.

Im oberen Totpunkt der Verstellbewegung des unteren Formtisches 190 nimmt die zweite Formhälfte 160 des Formwerkzeugs 90 eine Schließstellung bezüglich der ersten Formhälfte 110 ein. In dieser Schließstellung ist das Formwerkzeug 90 geschlossen, wie das mit Fig. 10 dargestellt ist. Die, die Mutterform 166 haltenden Federn 168 sind zusammengedrückt, und die untere Stirnfläche des Rahmens 167 der Mutterform 166 liegt an der Bodenplatte 163 an. Der von dem Träger 70 gehaltene Schichtstoff 40 liegt auf der umlaufenden Stirnfläche 169 der Mutterform 166 auf. Die Dichtfläche 113 der ersten Formhälfte 110 verbleibt in einem geringen Abstand zur Auflagefläche 169 an der Mutterform 166. Die in die Nut 116 eingesetzte Profildichtung 120 sorgt für eine druckdichte Abdichtung zwischen der Dichtfläche 113 und der Membranfolie 50. Sofern ein fluides Druckmittel über den Kanal 118 in die Kaverne 117 eingeführt wird, trifft dieses Druckmittel unmittelbar direkt auf die Membranfolie 50. Die Membranfolie 50 wirkt als flächiges Dichtmittel gegenüber dem Schichtstoff 40 und verhindert ein Entweichen von fluidem Druckmittel durch die Schnitte 41 und 43 hindurch. Folglich formt das in die Kaverne 117 eingeführte Druckmittel unmittelbar die Membranfolie 50 und mittelbar den Schichtstoff 40 innerhalb von 5 Sekunden, vorzugsweise schlagartig an die Kontur 165 des Werkzeugs 164 an. Daraufhin wird mit Hilfe der Steuerorgane 119 die Kaverne 117 wieder entlastet, und der untere Formtisch 190 wird abgesenkt. Die Federn 168 heben die Mutterform 166 an, und der verformte Schichtstoff 40 wird zusammen mit der Membranfolie 50 vom Werkzeug 164 gelöst.

### Beispiel:

### Kaschierung eines 3D-Trägerteils mit einem Holzfurnier.

Als zu kaschierendes 3D-Trägerteil wird eine gewölbte Armlehnenabdeckung an einer Türverkleidung eines Kraftfahrzeuges bereitgestellt;
diese Armlehnenabdeckung hat eine Länge von etwa 280 mm und eine Breite von 50 mm. Dieses 3D-Trägerteil wird in eine Trägerteilaufnahme an einem Werkzeug eingelegt. Als Werkzeug kann grundsätzlich ein mit den Figuren 9 und 10 dargestelltes Werkzeug in Betracht kommen, dessen Formhohlraum in der zweiten, unteren Werkzeughälfte 160 ausreichend Platz zur Unterbringung und Befestigung des 3D-Trägerteils bietet. Die konkav gewölbte Schale dieser Armlehnenabdeckung soll staub- und fettfrei sein, um eine optimale Verklebung mit dem Schichtstoff zu gewährleisten.

Der Schichtstoff besteht aus einem auf seiner Rückseite beziehungsweise Anlageseite vollflächig mit einem Vlies versehenen Echtholzfurnier;
das Vlies besteht aus einem Mischfasermaterial aus Polyesterfasern und Glasfasern und hat eine Schichtdicke von etwa 200 µm. Bei dem Echtholzfurnier handelt es sich um ein etwa 400 µm starkes Furnier aus Wurzelmaserholz mit ungerichtetem Faserverlauf; ein solches Echtholzfurnier kann von der Firma Richter Furniertechnik GmbH & Co. KG, DE-49326 Melle/St. Annen bezogen werden. In das Vlies ist ein pulverförmiger Trockenklebstoff eingearbeitet. Hierbei handelt es sich um eine Hitze-aktivierbare Klebemasse mit einer Aktivierungstemperatur von etwa 80 °C. Dieser Schichtstoff wird mittels einer Laserschneidanlage für den Umformprozess vorbereitet; alternativ könnten geeignete Schichtstoffstücke mit einem Schneidewerkzeug zugeschnitten werden. In diesem Arbeitsschritt werden sowohl die zur Positionierung notwendigen Langlöcher in dem auf dem Palettenrahmen aufzulegenden Randabschnitt des Schichtstoffstückes erzeugt, als auch die passenden Einschnitte benachbart und im Abstand zum umzuformenden Bereich des Schichtstoffabschnittes;
in diesem Falle werden rund um diesen Schichtstoffabschnitt herum 10 bis 16 einzelne Schnitte erzeugt, welche jeweils den Schichtstoff vollständig durchtrennen.

Der so vorbereitete Schichtstoff wird mit der Vlies- und Klebstoffschicht nach unten gerichtet auf dem Palettenrahmen aufgelegt, wobei die Positionierstifte am Palettenrahmen durch die Langlöcher im Randabschnitt des Schichtstoffes hindurch ragen. Auf der Sichtseite der Furnierschicht dieses Schichtstoffes wird ein Stück Membranfolie gleicher Größe aufgelegt;
als Membranfolie dient eine 250 µm starke Polycarbonatfolie (hier beispielsweise Makrofol^{®} DE 1-4 von BAYER AG);
diese Membranfolie liegt lose auf der Furnierschicht auf und wird ebenfalls von den Positionierstiften gehalten.

Der mit dem Schichtstoff und der Membranfolie bestückte Palettenrahmen wird nunmehr in eine Heizstation der HPF-Verformungsanlage verfahren. Hier wird einerseits mit Hilfe einer Oberheizung die Membranfolie auf ca. 150 °C erwärmt und flexibilisiert;
des Weiteren wird mit Hilfe von Unterheizung der in die Vliesschicht eingearbeitete Klebstoff bei ca. 80 °C aktiviert.

Daraufhin wird der Palettenrahmen rasch zwischen der oberen Werkzeughälfte und der unteren Werkzeughälfte des geöffneten Werkzeugs eingebracht und bezüglich des in der unteren Werkzeughälfte befindlichen 3D-Trägerteils zentriert. Nach druckdichtem Verschließen des Werkzeuges wird in die Druckglocke der oberen Werkzeughälfte Druckluft unter einem Druck von 150 bar eingeleitet. Diese Druckluft beaufschlagt direkt und unmittelbar die Membranfolie. Diese Beaufschlagung mit fluidem Druckmittel verformt die Doppelschicht aus Membranfolie und Schichtstoff und wickelt diese Doppelschicht auf dem 3D-Trägerteil ab. Hierbei verhindert die Membranfolie ein Entweichen der Druckluft durch die Schnitte im Schichtstoff hindurch. Nach einer Druckhaltezeit von etwa 2 Sekunden wird der Formhohlraum wieder auf Umgebungsdruck evakuiert. Beim Anheben des Palettenrahmens wird das mit dem Schichtstoff kaschierte 3D-Trägerteil aus der Trägerteilaufnahme gelöst, und kann zusammen mit dem Palettenrahmen aus der Anlage herausgebracht werden. Die Membranfolie kann entfernt werden oder kann zumindest zeitweilig als Schutzfolie auf dem kaschierten 3D-Trägerteil verbleiben. Anschließend wird mit Hilfe gängiger Fertigungsschritte, wie beispielsweise Ausfräsen oder Ultraschallschneiden, überschüssiges Schichtstoffmaterial vom kaschierten 3D-Trägerteil entfernt.

## Patentansprüche

1. Verfahren zur Umformung eines ebenen
Schichtstoffes mit wenigstens nachstehenden Verfahrensschritten:
- es wird ein ebenes Schichtstoffstück bereitgestellt, das wenigstens einen Schichtstoffabschnitt umfasst, an dem eine Umformung vorgenommen werden soll,
wobei dieser Schichtstoffabschnitt wenigstens einen randnahen Bereich aufweist, in dem der Schichtstoff beim Verformungs vorgang umgeformt wird (randnaher, zu verformender Bereich);
- innerhalb des Schichtstoffstückes, außerhalb des Schichtstoffabschnittes und benachbart sowie im Abstand zu diesem randnahen, zu verformenden Bereich wird wenigstens ein, das Schichtstoffstück längs einer begrenzten Länge durchtrennender Schnitt erzeugt;
- das mit diesem oder diesen Schnitt(en) versehene Schichtstoff stück wird in definierter Anordnung an einem Rahmen angebracht, wobei lediglich die randseitigen Abschnitte des Schichtstoffstückes auf dem Rahmen aufliegen;
- wahlweise kann das so auf dem Rahmen aufliegende Schichtstoffstück in eine Heizzone eingebracht werden, und dort wenigstens der Schichtstoffabschnitt auf eine vorgegebene höhere Temperatur erwärmt werden;
- das so auf dem Rahmen aufliegende ebene Schichtstoffstück wird innerhalb eines Formwerkzeugs umgeformt, wobei wenigstens der Schichtstoffabschnitt an eine Kontur einer vorgegebenen Formfläche des Werkzeuges oder an wenigstens einen Teil der Oberfläche eines, innerhalb des Formwerkzeugs befindlichen Trägerteils angelegt wird; und
- überschüssige, den verformten Schichtstoffabschnitt umgebende Teile des Schichtstoffstückes werden abgetrennt und entfernt;
**dadurch gekennzeichnet, dass**
die Umformung mit Hilfe von fluidem Druckmittel unter einem Druckmitteldruck größer 20 bar innerhalb einer Zeitspanne kleiner 5 Sekunden bewirkt wird.

2. Verfahren zur Herstellung eines dreidimensional verformten Formteils aus einem Schichtstoff (3D-Schichtstoffformteil),
mit wenigstens nachstehenden Verfahrensschritten:
- es wird ein ebenes Schichtstoffstück bereitgestellt, das wenigstens einen Schichtstoffabschnitt umfasst, der hinsichtlich seiner Größe dem herzustellenden 3D-Schichtstoffformteil entspricht, wobei dieser Schichtstoffabschnitt wenigstens einen randnahen Bereich aufweist, in dem der Schichtstoff beim Verformungsvorgang umgeformt wird (randnaher, zu verformender Bereich);
- innerhalb des Schichtstoffstückes, außerhalb des Schichtstoffabschnittes und benachbart sowie im Abstand zu diesem randnahen, zu verformenden Bereich wird wenigstens ein, das Schichtstoffstück längs einer begrenzten Länge durchtrennender Schnitt erzeugt;
- das mit diesem oder diesen Schnitt(en) versehene Schichtstoffstück wird in definierter Anordnung an einem Rahmen angebracht, wobei lediglich die randseitigen Abschnitte des Schichtstoffstückes auf dem Rahmen aufliegen;
- wahlweise kann das so auf dem Rahmen aufliegende Schichtstoffstück in eine Heizzone eingebracht werden, und dort wenigstens der Schichtstoffabschnitt auf eine vorgegebene höhere Temperatur erwärmt werden;
- das so auf dem Rahmen aufliegende ebene Schichtstoffstück wird innerhalb eines Formwerkzeugs umgeformt, wobei wenigstens der Schichtstoffabschnitt an eine Kontur einer vorgegebenen Formfläche des Formwerkzeugs angelegt und zum 3D-Schichtstoffformteil umgeformt wird; und
- überschüssige, das 3D-Schichtstoffformteil umgebende Teile des
Schichtstoffstückes werden abgetrennt und entfernt;
**dadurch gekennzeichnet, dass**
die Umformung mit Hilfe von fluidem Druckmittel unter einem Druckmitteldruck größer 20 bar innerhalb einer Zeitspanne kleiner 5 Sekunden bewirkt wird.

3. Verfahren zur Kaschierung eines 3D-Trägerteils mit einem als Bezugsmaterial für das 3D-Trägerteil dienenden Schichtstoff,
mit wenigstens nachstehenden Verfahrensschritten:
- es wird ein ebenes Schichtstoffstück bereitgestellt, das wenigstens einen Schichtstoffabschnitt umfasst, der an das 3D-Trägerteil angelegt werden soll, und der an seiner Anlageseite mit einem Kleber versehen ist,
wobei dieser Schichtstoffabschnitt wenigstens einen randnahen Bereich (aufweist, in dem der Schichtstoff beim Kaschiervorgang umgeformt wird (randnaher, zu verformender Bereich);
- innerhalb des Schichtstoffstückes, außerhalb des Schichtstoffabschnittes und benachbart sowie im Abstand zu diesem randnahen, zu verformenden Bereich wird wenigstens ein, das Schichtstoffstück längs einer begrenzten Länge durchtrennender Schnitt erzeugt;
- das mit diesem oder diesen Schnitt(en) versehene Schichtstoffstück wird in definierter Anordnung an einem Rahmen angebracht, wobei lediglich die randseitigen Abschnitte des Schichtstoffstückes auf dem Rahmen aufliegen;
- das so auf dem Rahmen aufliegende Schichtstoffstück wird in eine Heizzone eingebracht und dort wenigstens der mit dem Kleber versehene, Schichtstoffabschnitt auf wenigstens die Aktivierungstemperatur des Klebers erwärmt;
- das so auf dem Rahmen aufliegende ebene und erwärmte Schichtstoffstück wird innerhalb eines Werkzeugs umgeformt, wobei wenigstens der Schichtstoffabschnitt an wenigstens einen Teil der Oberfläche des in dem Werkzeug befindlichen 3D-Trägerteils angelegt und ankaschiert wird; und
- überschüssige, vom kaschierten 3D-Trägerteil abstehende Teile des Schichtstoffstückes werden abgetrennt und entfernt;
**dadurch gekennzeichnet, dass**
die Umformung mit Hilfe von fluidem Druckmittel unter einem Druckmitteldruck größer 20 bar innerhalb einer Zeitspanne kleiner 5 Sekunden bewirkt wird.

4. Verfahren zur Herstellung eines, wenigstens teilweise bedruckten, metallisierten und/oder sonst wie beschichteten, dreidimensional verformten Folienteils (3D-Folienteil),
mit wenigstens nachstehenden Verfahrensschritten:
- es wird ein ebenes, auf einer oder auf beiden Oberfläche(n) wenigstens teilweise bedrucktes, metallisiertes und/oder sonst wie beschichtetes Folienstück aus thermoplastischem Kunststoff bereitgestellt, das wenigstens einen Folienabschnitt umfasst, der hinsichtlich Größe und Bedruckung, Metallisierung und/oder Beschichtung dem herzustellenden 3D-Folienteil entspricht, wobei dieser Folienabschnitt wenigstens einen randnahen Bereich aufweist, in dem die Kunststofffolie und die mit ihr verbundene Bedruckung, Metallisierung und/oder Beschichtung beim Verformungsvorgang umgeformt wird (randnaher, zu verformender Bereich);
- innerhalb des Folienstückes, außerhalb des Folienschnittes und benachbart sowie im Abstand zu diesem randnahen, zu verformenden Bereich wird wenigstens ein, das Folienstück längs einer begrenzten Länge durchtrennender Schnitt erzeugt;
- das mit diesem oder diesen Schnitt(en) versehene Folienstück wird in definierter Anordnung an einem Rahmen angebracht, wobei lediglich die randseitigen Abschnitte des Folienstückes auf dem Rahmen aufliegen;
- das so auf dem Rahmen aufliegende Folienstück wird in eine Heizzone eingebracht, und dort wenigstens der Folienabschnitt auf eine vorgegebene Temperatur erwärmt;
- das so auf dem Rahmen aufliegende ebene und erwärmte Folienstück wird innerhalb eines Werkzeugs umgeformt, wobei wenigstens der Folienabschnitt an eine Kontur einer vorgegebenen Formfläche de Werkzeugs angelegt und zum 3D-Folienteil umgeformt wird; und
- überschüssige, das 3D-Folienteil umgebende Teile des Folienstückes werden abgetrennt und entfernt;
**dadurch gekennzeichnet, dass**
die Umformung mit Hilfe von fluidem Druckmittel unter einem Druckmitteldruck größer 20 bar innerhalb einer Zeitspanne kleiner 5 Sekunden bewirkt wird.

5. Verfahren nach einem der Ansprüche 1 bis 4,
**dadurch gekennzeichnet, dass**
das an dem Rahmen angebrachte ebene Schichtstoffstück bzw. Folienstück zusätzlich mit einer Membranfolie versehen ist oder wird, die lose auf dem Schichtstoffstück bzw. dem Folienstück aufliegt; zur Umformung diese Membranfolie unmittelbar und direkt mit dem fluiden Druckmittel unter einem Druckmitteldruck größer 20 bar beaufschlagt wird; und
die so beaufschlagte Membranfolie wenigstens den Schichtstoffabschnitt bzw. Folienabschnitt an die Kontur der Formfläche bzw. an die Oberfläche des 3D-Trägerteils anschmiegt.

6. Verfahren nach Anspruch 5,
**dadurch gekennzeichnet, dass**
die Membranfolie aus einem Material besteht, das aus einer Gruppe ausgewählt ist, die umfasst: Silikonmaterialien; Polyvinylchlorid (PVC); Polypropylen (PP); Polyethylen (PE); Polycarbonat (PC); Acrylnitril-Butadien-Styrol-Copolymere (ABS); Blends aus PC und ABS; Copolymerisate aus Tetrafluorethylen und Hexafluorpropylen (FEP); Polytetrafluorethylen (PTFE); Polyamid (PA); Polyethylenterephthalat (PET); sonstige thermoplastische Elastomere (TPE) und thermoplastische Polyurethanmaterialien (TPU).

7. Verfahren nach einem der Ansprüche 1 bis 3,
**dadurch gekennzeichnet, dass**
der Schichtstoff aus einer Gruppe
ausgewählt ist, die umfasst
- einlagige Folien und mehrlagige Verbundfolien, je aus thermoplastischen Kunststoffen und deren Blends;
- einlagige Folien und mehrlagige Verbundfolien, je aus thermoplastischen Kunststoffen und deren Blends, die zusätzlich mit einer wenigstens teilweisen Bedruckung, Metallisierung und/oder sonstigen Beschichtung versehen sind;
- Furniere aus Holz, hier auch Edelholzfurniere;
- Leder und Kunstleder, einschließlich ALCANTARA^{®};
- Schicht- und Plattenmaterialien aus Naturwerkstoffen, wie Kork, Hanf, Flachs und Bambus;
- Platten und Folien aus Metall, wie Aluminium, Magnesium, Al/Mg-Legierungen, Edelstahl, Kupfer und Titan;
- Echtsteinfurniere und -schichten;
- Papier, Pappe und Karton;
- Fasermaterialien aus Naturfasern, Kunststofffasern, Glasfasern, Stein- und Keramikmaterialien sowie Kohlenstoff (Carbon), etwa in der Form von textilen Materialien (Web- und Wirkwaren), Vliese und sonstige Wirrfaserlagen, sowie mit derartigen Fasermaterialien verstärkte Kunststoffe;
- Verbundwerkstoffe, wie etwa Laminate aus Holz und Kunststoff, Laminate aus Holz und Fasermaterialien, sowie Laminate aus Stein- und Keramikmaterialien mit Fasermaterialien.

8. Verfahren nach Anspruch 3,
**dadurch gekennzeichnet, dass**
der Kleber eine Hitze-aktivierbare Klebemasse ist,
die aus einer Gruppe ausgewählt ist, die umfasst:
a) eine Hitze-aktivierbare Klebemasse, die im wesentlichen besteht aus einem elastomeren Basispolymer und aus einem Modifikationsharz, wobei das Modifikationsharz ein Klebharz und/oder ein Reaktivharz umfasst; und
das elastomere Basispolymer ein thermoplastisches Polyurethan oder ein Gemisch aus pulverförmigen, Polyurethan-bildenden Komponenten, wie aromatischen Diisocyanaten und Polyesterpolyolen mit einem hohen Gehalt an endständigen Hydroxylgruppen umfasst;
b) eine Hitze-aktivierbare Klebemasse, die besteht aus:
- 50 bis 95 Gew.-% eines verklebbaren Polymers, und aus
- 5 bis 50 Gew.-% eines Epoxidharzes oder einer Mischung aus mehreren Epoxidharzen;
wobei das verklebbare Polymer seinerseits umfasst Acrylsäureverbindungen und/oder Methacrylsäureverbindungen und ein oder mehrere copolymerisierbare Vinylmonomere;
c) eine Hitze-aktivierbare Klebemasse, die besteht aus:
- 40 bis 98 Gew.-% acrylhaltigem Blockpolymer,
- 2 bis 50 Gew.-% eines oder mehrerer klebrig machender Epoxidharze und/oder Novolakharze und/oder Phenolharze; und
- 0 bis 10 Gew.-% Härter zum Vernetzen der Epoxidharze und/oder der Novolakharze und/oder der Phenolharze;
wobei diese Hitze-aktivierbaren Klebemassen (a), (b) und (c) je auf eine Aktivierungstemperatur im Bereich von 60 bis 140 °C eingestellt sind.

9. Verfahren nach einem der Ansprüche 1 bis 4,
**dadurch gekennzeichnet, dass**
um den gesamten Umfang des umzuformenden Schichtstoffabschnittes bzw. Folienabschnittes (2) herum eine ganze Anzahl Schnitte (18) begrenzter Länge erzeugt werden, die benachbart und im Abstand zum gesamten randnahen umzuformenden Bereich (4") am Schichtstoffabschnitt bzw. Folienabschnitt (2) angeordnet sind.

10. Verfahren nach einem der Ansprüche 1 bis 4 und 9,
**dadurch gekennzeichnet, das**
der Schnitt (15, 15', 17, 17', 18) in einem Abstand zum Rand des Schichtstoffabschnittes bzw. des Folienabschnittes (2) erzeugt wird, der in etwa derjenigen Höhe bzw. Tiefe entspricht, zu welcher der Schichtstoffabschnitt bzw. der Folienabschnitt verformt werden soll.

11. Verfahren nach einem der Ansprüche 1 bis 4, 9 und 10,
**dadurch gekennzeichnet, dass**
jeder Schnitt (15, 15', 17, 17', 18) anlässlich und gemeinsam mit der Erzeugung von Positionierlöchern (9) in randseitigen Abschnitten des Schichtstoffstückes bzw. des Folienstückes (1) erzeugt wird, die zur definierten Anordnung des Schichtstoffstückes bzw. des Folienstückes (1) am Rahmen benötigt werden.

12. Verfahren nach einem der Ansprüche 4, 9, 10 und 11,
**dadurch gekennzeichnet, dass**
das herzustellende 3D-Folienteil (20) zur Erzeugung eines schalenförmigen Gehäuseteils für ein mobiles Telekommunikationsgerät bestimmt ist;
dieses 3D-Folienteil (20) eine im wesentlichen ebene Rückenwand (21) und eine damit einstückig und abgerundet verbundene Seitenwand (23) hat, die sich wenigstens längs eines Teils des Rückenwandumfangs erstreckt und senkrecht zur Rückenwandebene ausgerichtet ist; und die Metallisierung eine flächige Antennenstruktur, eine Signalleitung, eine Verbindungsleitung zu einem flächigen elektrischen Anschluss, einen flächigen elektrischen Anschluss und/oder dergleichen bildet, die vor allem an der Innenseite der Rückenwand (21) anliegt,
wobei jedoch Teile der Antennenstrukturen (28, 30, 35), der Signalleitung(en) (31) der Verbindungsleitungen (32, 36, 38) zu elektrischen Anschlüssen, der flächigen elektrischen Anschlüsse (29, 33, 37, 39) auch an der Innenseite von Seitenwandabschnitten (24, 26) anliegen; und gegebenenfalls auch an der Innenseite von abgerundeten Eckenbereichen (25) anliegen, die von drei, wechselseitig orthogonal ausgerichteten Flächen (21, 24, 26) begrenzt werden.

13. Verfahren nach Anspruch 12,
**dadurch gekennzeichnet, dass**
diese metallischen flächigen Antennenstrukturen (28, 30, 35), diese Signalleitung(en) (31), diese Verbindungsleitung(en) (32, 36, 38) und diese flächigen elektrischen Anschlüsse (29, 33, 37, 39) mit Hilfe einer, elektrisch leitende Metallpartikel enthaltenden Siebdruckpaste im Siebdruckverfahren auf der Folie aus thermoplastischem Kunststoff aufgebracht worden sind.

14. Verfahren nach Anspruch 13,
**dadurch gekennzeichnet, dass**
diese metallischen flächigen Antennenstrukturen (28, 30, 35), diese Signalleitung(en) (31), diese Verbindungsleitung(en) (32, 36, 38) und diese flächigen elektrischen Anschlüsse (29, 33, 37, 39) auf einer, vorher auf der Folie aus transparentem, thermoplastischem Kunststoff aufgebrachten Dekorschicht aufgebracht werden.

15. Schalenförmiges Gehäuseteil für ein Telekommunikationsgerät, enthaltend das nach einem der Ansprüche 12 bis 14 erhältliche 3D-Folienteil (20), das an seiner konkaven Innenseite mit weiterem Kunststoff hinterspritzt worden ist.
